# EUROPEAN PATENT APPLICATION

(11) **EP 4 059 618 A1**
(43) Date of publication of application: **21.09.2022**
(21) Application number: 19952870.4
(22) Date of filing: 14.11.2019
(51) Int. Cl.: B05D 1/36, C08L 33/14

(54) **THERMOSETTING RESIN COMPOSITION, CURED FILM, METHOD FOR FORMING MULTILAYER COATING FILM, ESTER COMPOUND, AND POLYMER**

(71) Applicant: Kyoeisha Chemical Co., Ltd., Osaka-shi, Osaka 541-0054 (JP)
(72) Inventor: MORIWAKI, Yuya, Nara-shi, Nara 630-8453 (JP); MATSUDA, Tomoya, Nara-shi, Nara 630-8453 (JP); ASADA, Kosuke, Nara-shi, Nara 630-8453 (JP); DONKAI, Masaru, Nara-shi, Nara 630-8453 (JP); NAKAGAWA, Hiroki, Nara-shi, Nara 630-8453 (JP); MAEO, Keiji, Nara-shi, Nara 630-8453 (JP); YOSHIDA, Narutoshi, Nara-shi, Nara 630-8453 (JP); TAKENAKA, Naomi, Nara-shi, Nara 630-8453 (JP)
(74) Representative: Isarpatent
(86) International application number: PCT/JP2019/044708
(87) International publication number: WO 2021/095202

(57) **Abstract**

[Problem] To obtain a thermosetting resin composition that has curing performance at a lower temperature and uses transesterification capable of also suitably coping with conversion into an aqueous form as a curing reaction.

[Solution] A thermosetting resin composition containing a resin component (A), which includes a structure (a) represented by the following general formula (1) and a hydroxy group (b), and a transesterification catalyst (B). 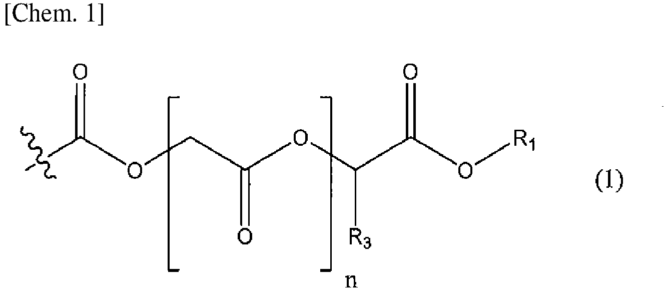 n = 0 to 20
R₁ is an alkyl group having 50 or less carbon atoms.
R3 is hydrogen or an alkyl group having 10 or less carbon atoms.

## Description

### Technical Field

The present invention relates to a thermosetting resin composition, a cured film, a method for forming a multilayer coating film, an ester compound, and a polymer.

### Background Art

The present inventors have studied thermosetting resin compositions that use a transesterification reaction as a curing reaction (PTLs 1 to 3). By a recent study, it is becoming clear that curing performance equivalent to that of curing using a generally known melamine resin or polyisocyanate compound can be ensured by using a transesterification reaction as a curing reaction.

On the other hand, in recent years, due to the demand for energy saving, it has been desired to perform curing at a lower temperature than before. Also in various methods as described in PTLs 1 to 3, the temperature can be sufficiently lowered, however, it is preferable if the curing can be achieved at a still lower temperature than ever before.

Further, it has also been desired to reduce the volatilization amount of a volatile organic compound, and the conversion into an aqueous form of a thermosetting composition has also been studied. When the conversion into an aqueous form of a thermosetting composition that uses transesterification as a curing reaction was studied, it became clear that the thermosetting reactivity is lowered by the conversion into an aqueous form, and there arises a need to perform the reaction at a high temperature during curing.

It is presumed that such a problem is caused by introducing an acid group into the resin in order to perform conversion into an aqueous form. Therefore, even in the case of an organic solvent-based thermosetting resin composition, when a multilayer coating film is formed by wet-on-wet coating with an aqueous coating material, there is a problem that also in the case where a resin composition that uses transesterification as a curing reaction is not an aqueous coating material, the reactivity of the curing reaction is lowered due to the presence of the aqueous coating material of the lower layer.

PTL 4 discloses a curable resin composition that uses a compound containing an ester group represented by a specific structure and causes a curing reaction by transesterification. However, a detailed study for obtaining sufficient low-temperature curability has not been performed.

### Citation List

### Patent Literature

PTL 1: Japanese Patent No. 6398026
PTL 2: WO 2019/069783
PTL 3: WO 2019/139069
PTL 4: JP-A-2003-119401

### Summary of Invention

### Technical Problem

In view of the above, an object of the present invention is to obtain a thermosetting resin composition that has curing performance at a lower temperature and uses transesterification capable of also suitably coping with conversion into an aqueous form as a curing reaction.

### Solution to Problems

The present invention is a thermosetting resin composition characterized by containing a resin component (A), which includes a structure (a) represented by the following general formula (1) and a hydroxy group (b), and a transesterification catalyst (B).

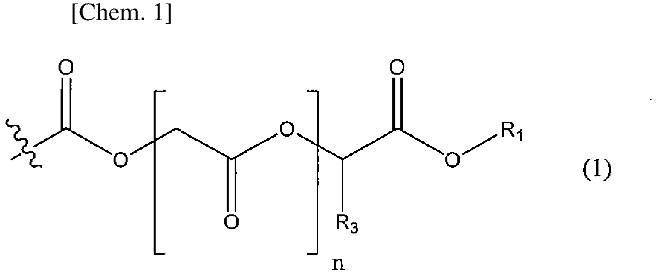

n = 0 to 20
R₁ is an alkyl group having 50 or less carbon atoms.
R3 is hydrogen or an alkyl group having 10 or less carbon atoms.

It is preferable that the resin component (A) includes a compound having two or more functional groups in one molecule.

It is preferable that the structure (a) is a structure derived from a monomer represented by the following general formula (2).

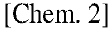

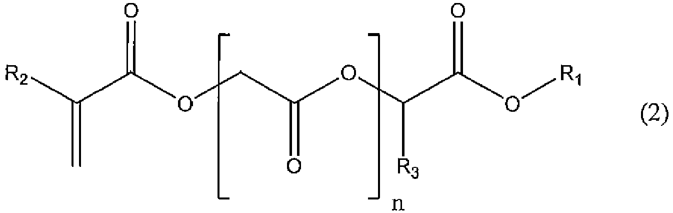

n = 0 to 20
R₁ is an alkyl group having 50 or less carbon atoms.
R2 is hydrogen or a methyl group.
R3 is hydrogen or an alkyl group having 10 or less carbon atoms.

It is preferable that the resin component (A) is a mixture of a plurality of structures having different values of n in the structure (a).

It is preferable that the thermosetting resin composition is an aqueous resin composition.

It is preferable that the resin component (A) further has a carboxylate group and is converted into an aqueous form by neutralizing the carboxylate group with a basic compound.

It is preferable that the thermosetting resin composition is an organic solvent-based resin composition.

The present invention is also a cured film characterized by being obtained by curing the resin composition described above by heat.

The present invention is also a method for forming a multilayer coating film characterized by including:
a step (1) of coating and drying an aqueous resin composition;
a step (2) of coating the thermosetting resin composition described above by a wet-on-wet process; and
a step (3) of curing a multilayer coating film formed in the step (1) and the step (2).

The present invention is also a compound represented by the following general formula (3).

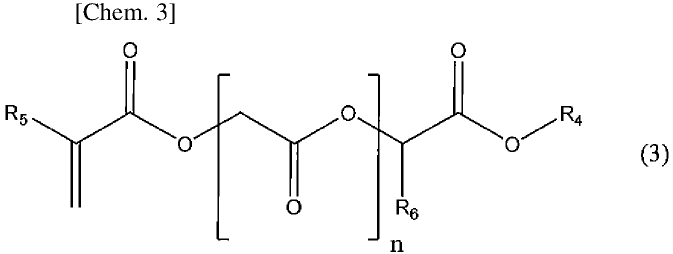

(In the formula, n is an integer of 1 to 20.)
R4 is an alkyl group having 1 to 50 carbon atoms.
R₅ is hydrogen or a methyl group.
R₆ is hydrogen or an alkyl group having 10 or less carbon atoms.

The present invention is also a polymer containing the compound as a part or the whole of the constituent unit.

### Advantageous Effects of Invention

The thermosetting resin composition of the present invention is a thermosetting resin composition that uses a transesterification reaction as a curing reaction, and has higher reactivity than known resin compositions having the same curing system, and therefore can be cured at a low temperature. Further, it is possible to provide a thermosetting resin composition that causes a suitable curing reaction even when it is an aqueous coating material composition. In addition, the novel compound of the present invention can be suitably used as a raw material for providing such a thermosetting resin composition.

### Brief Description of Drawings

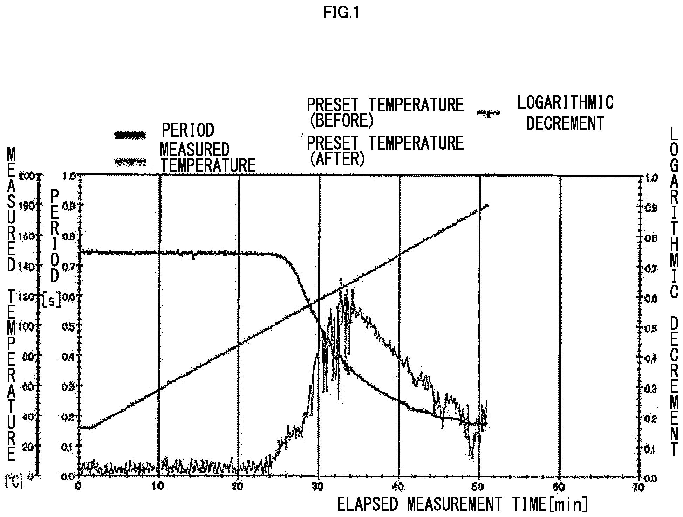

[FIG. 1] FIG. 1 shows rigid body pendulum tester data of Example 1.

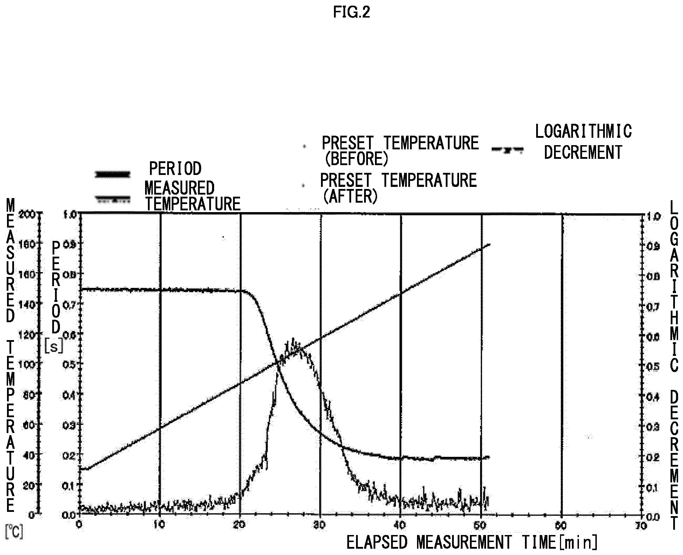

[FIG. 2] FIG. 2 shows rigid body pendulum tester data of Example 2.

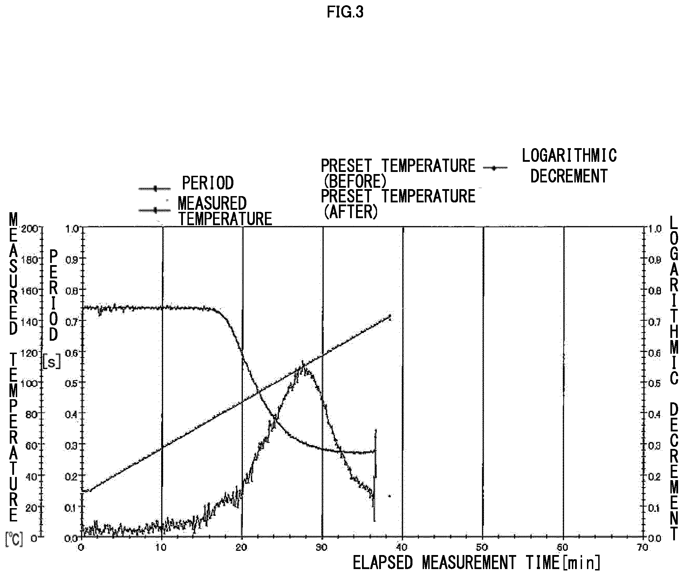

[FIG. 3] FIG. 3 shows rigid body pendulum tester data of Example 3.

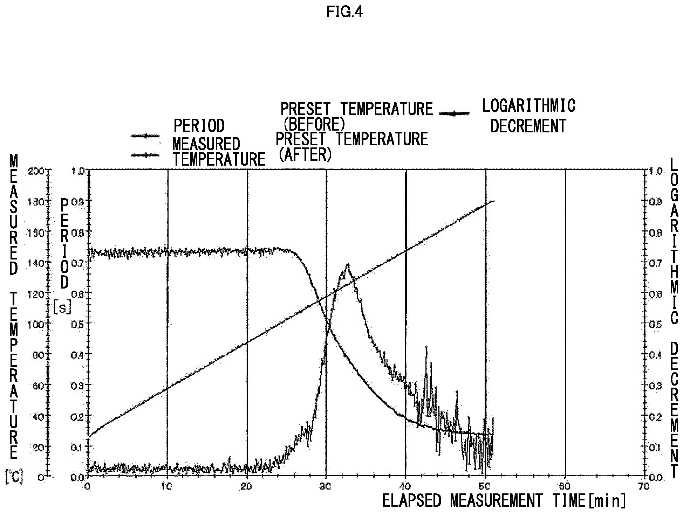

[FIG. 4] FIG. 4 shows rigid body pendulum tester data of Example 4.

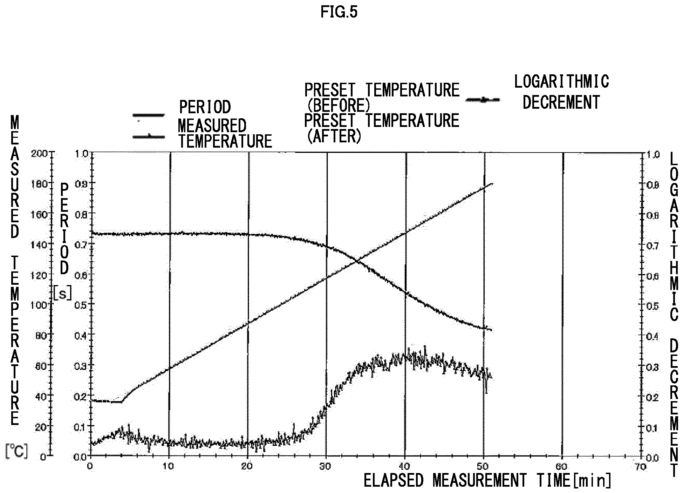

[FIG. 5] FIG. 5 shows rigid body pendulum tester data of Example 5.

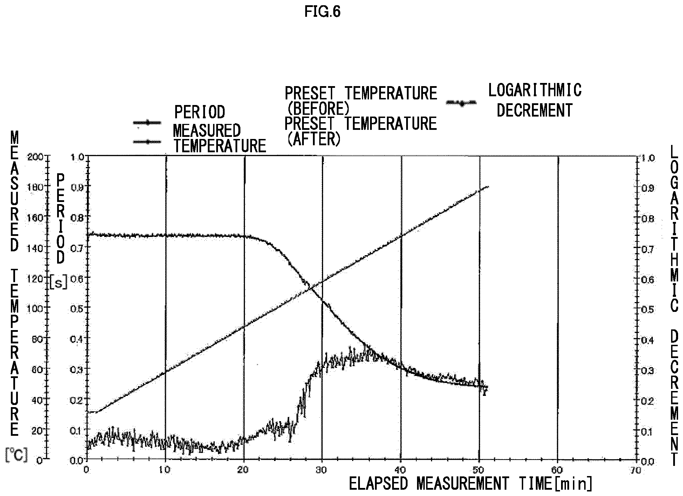

[FIG. 6] FIG. 6 shows rigid body pendulum tester data of Example 6.

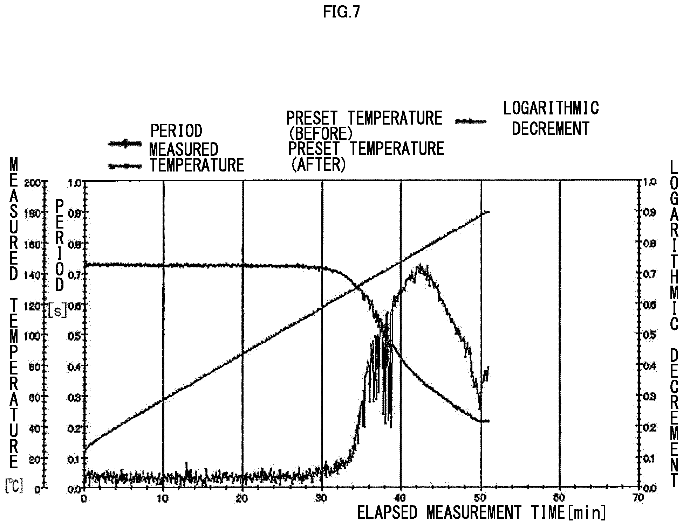

[FIG. 7] FIG. 7 shows rigid body pendulum tester data of Example 7.

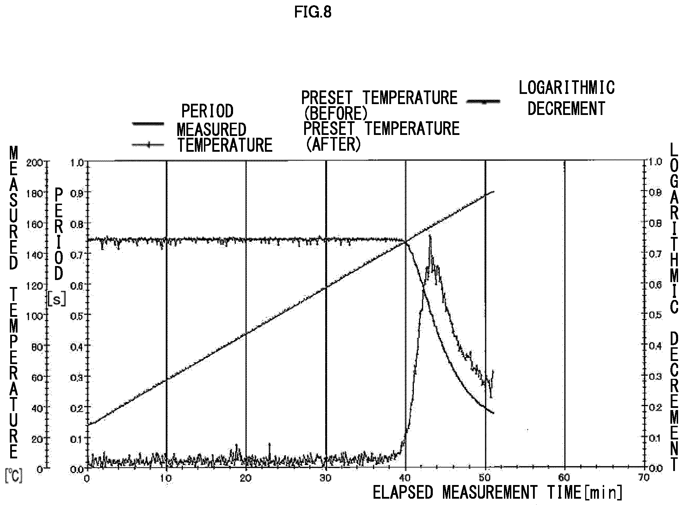

[FIG. 8] FIG. 8 shows rigid body pendulum tester data of Comparative Example 1.

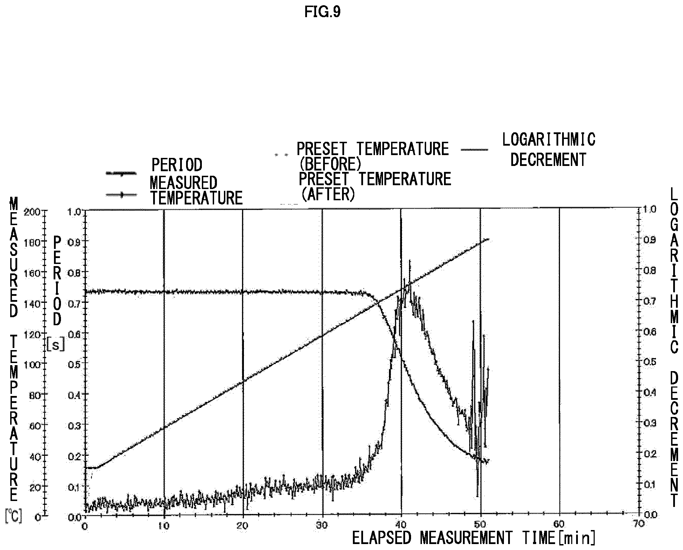

[FIG. 9] FIG. 9 shows rigid body pendulum tester data of Comparative Example 2.

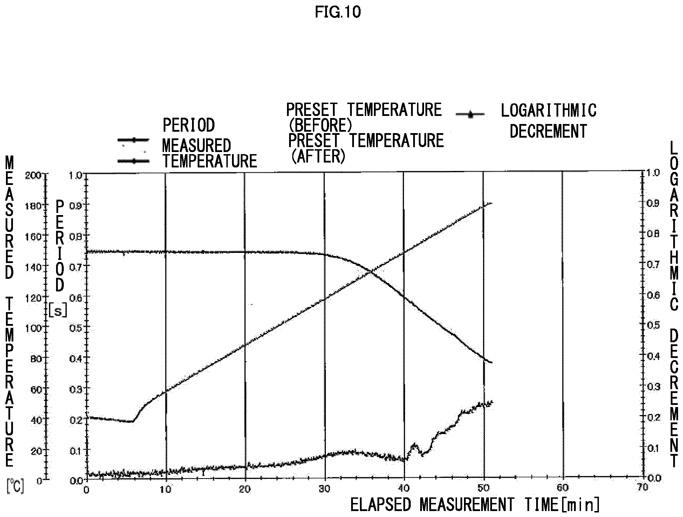

[FIG. 10] FIG. 10 shows rigid body pendulum tester data of Example 8.

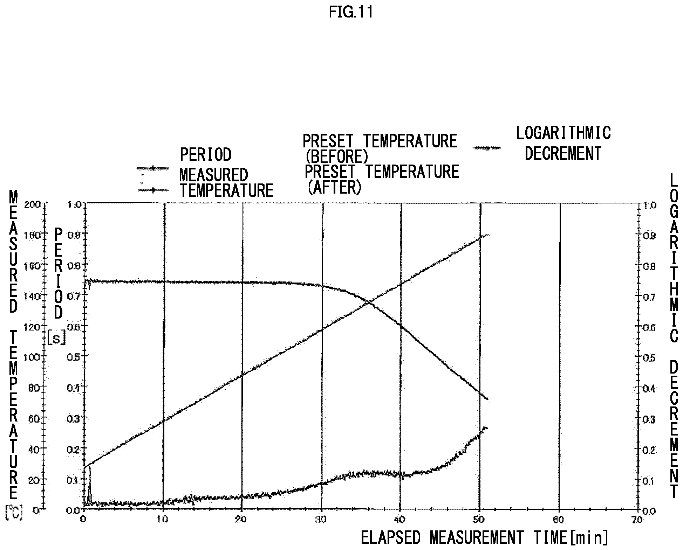

[FIG. 11] FIG. 11 shows rigid body pendulum tester data of Example 9.

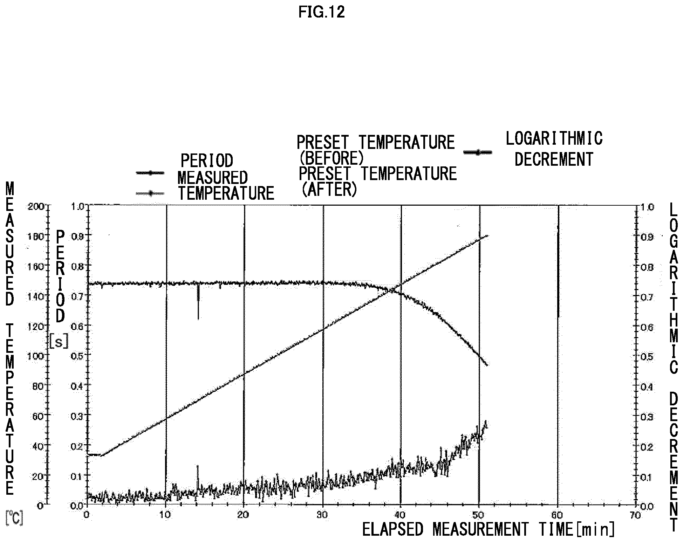

[FIG. 12] FIG. 12 shows rigid body pendulum tester data of Example 10.

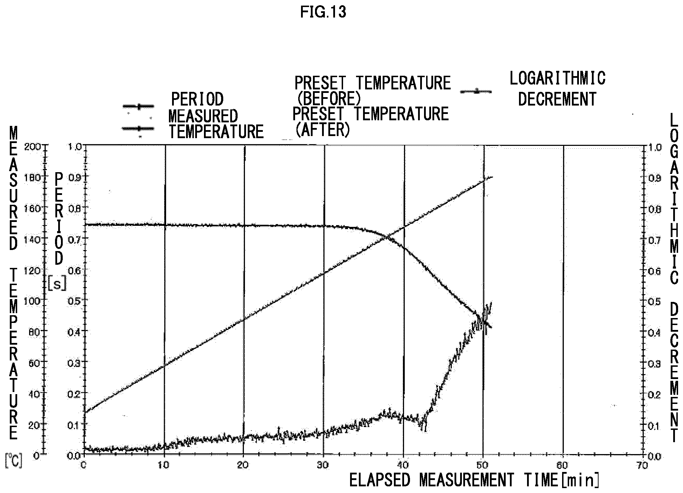

[FIG. 13] FIG. 13 shows rigid body pendulum tester data of Example 11.

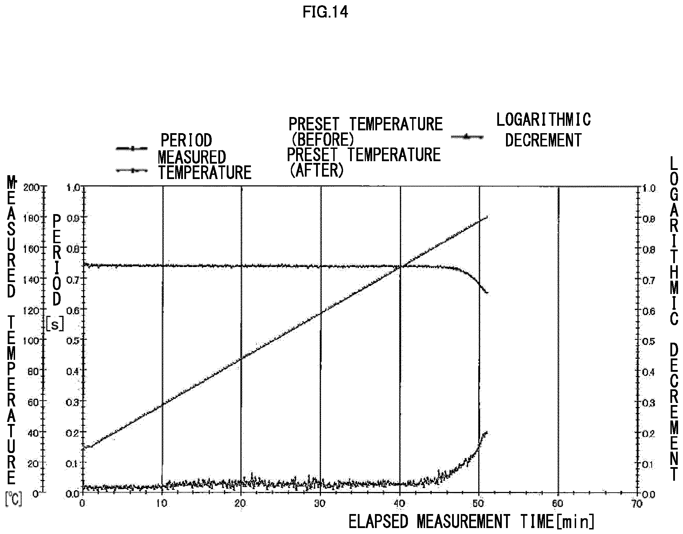

[FIG. 14] FIG. 14 shows rigid body pendulum tester data of Comparative Example 3.

### Description of Embodiments

Hereinafter, the present invention will be described in detail.

In a thermosetting resin composition, a melamine resin, an epoxy compound, an isocyanate compound, or the like is generally used as a curing agent.

However, a melamine resin generates formaldehyde and causes sick building syndrome, and therefore, its use may sometimes be limited in recent years. Further, when it is used as a coating material, it is known that there is a problem in acid resistance due to its chemical structure.

An epoxy compound is said to have high curability and high coating film physical properties, but have low storage stability and a high curing temperature, and a polyisocyanate curing system is said to have high curability and high coating film physical properties, but have a narrow range of design.

The present inventors have studied a transesterification-type thermosetting resin composition that can improve these problems, can be cured at a low temperature, is highly safe, and can realize low cost.

The present invention is a thermosetting resin composition characterized by containing a resin component (A), which includes a structure (a) represented by the following general formula (1) and a hydroxy group (b), and a transesterification catalyst (B).

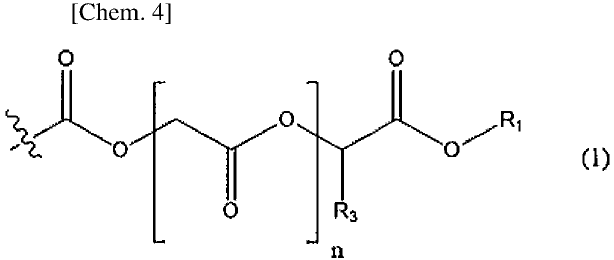

n = 0 to 20
R₁ is an alkyl group having 50 or less carbon atoms.
R3 is hydrogen or an alkyl group having 10 or less carbon atoms.

The ester group represented by the above general formula (1) has high transesterification reactivity, although the reason is unknown. Therefore, by using an ester compound having the functional group as a part or the whole of the resin component (A), a thermosetting resin composition having more excellent curing performance than before can be obtained.

Further, as described above, in the transesterification reaction, the presence of a carboxylate group lowers the catalytic activity and makes it difficult for the reaction to proceed. On the other hand, when an aqueous thermosetting resin composition is used, in many cases, a carboxylate group is introduced into a resin and neutralized with a basic compound such as an amine compound to make the resin water soluble and use the resultant.

Due to the action of the carboxylate group introduced as such a hydration functional group, the aqueous thermosetting resin composition that uses a transesterification reaction as a curing reaction has a problem that the curing reactivity is lowered as compared with a solvent-based resin composition, and there arises a need to perform curing at a high temperature.

On the other hand, the ester group represented by the above general formula (1) has high transesterification reactivity, and therefore, the high reactivity can be maintained even when a carboxylate group is present. Accordingly, an aqueous thermosetting resin composition that causes a transesterification reaction at a low temperature can be provided.

Further, even when the thermosetting resin composition is used as a coating material and wet-on-wet coating is performed, the thermosetting resin composition of the present invention has a better effect than ever before and can be suitably used.

In the coating field such as automobile coating materials, formation of a multilayer coating film in which a plurality of coating film layers are laminated is often performed.

In the formation of such a multilayer coating film, a coating film forming method in which a solvent-based clear coating material is applied onto an uncured coating film, for which only drying is performed after coating an aqueous base coating material and thermal curing is not performed, and the two layers are simultaneously cured is generally performed.

In such coating, the components of the aqueous base coating film are transferred to the clear coating film. As a result, the catalytic activity of the solvent-based clear coating material was deactivated, and the curability of the clear coating material was not sufficiently obtained in some cases. For this reason, curing could not be sufficiently achieved at a low temperature, and the effect of achieving low temperature curing was not sufficiently obtained in some cases.

Since the ester group having the structure of the above general formula (1) has high reactivity as described above, even if a mixed layer with a coating film of another layer is generated in the formation of a multilayer coating film by the wet-on-wet process described above, curing can be carried out at a relatively low temperature. As a result, a multilayer coating film can be efficiently formed by curing at a low temperature.

In the formation of a multilayer coating film by the wet-on-wet process described above, the thermosetting resin composition of the present invention can also be used as an aqueous base coating material composition for the lower layer or can also be used as a solvent-based clear coating material composition for the upper layer. Further, the thermosetting resin composition of the present invention can also be used for both.

Hereinafter, the compound having an ester group having the structure of the above general formula (1) will be described in detail.

### About Structure of General Formula (1)

The structure of the above general formula (1) is based on an α-substituted carboxylate ester backbone.

In the general formula (1), n is 0 to 20.

The lower limit of n is more preferably 1. The upper limit of n is more preferably 5.

Further, it may be a mixture of a plurality of components having different values of n in the above general formula (1). In this case, the average value nav of n is preferably 0 to 5. The lower limit of nav is more preferably 1. The upper limit of nav is more preferably 3. The measurement of nav can be carried out by an NMR analysis. Further, the value of n can also be measured by an NMR analysis.

n may be 0, but is preferably a value exceeding 0 from the viewpoint that a thermosetting resin composition having higher reactivity can be obtained.

That is, when n is 1 or more, curing at a lower temperature can be achieved, and thereby the effect of the present invention can be more preferably exhibited.

More specifically, when n = 0, thermal curing at 120°C can be carried out, and when n = 1 or more, thermal curing at 100°C can be carried out.

In the above general formula (1), any alkyl group having 50 or less carbon atoms can be used as R₁, and it may be any of primary, secondary, and tertiary.

The alkyl group in the alkyl ester group (that is, R₁ in the above general formula) is an alkyl group having 50 or less carbon atoms, and more preferably, the number of carbon atoms is in a range of 1 to 20, and still more preferably in a range of 1 to 10, and yet still more preferably in a range of 1 to 6. It is most preferably in a range of 1 to 4. By setting it within such a range, the curing reaction can be suitably allowed to proceed, which is preferable.

As the alkyl group, specifically, for example, a known one having an ester group such as a methyl ester group, an ethyl ester group, a benzyl ester group, an n-propyl ester group, an isopropyl ester group, an n-butyl ester group, an isobutyl ester group, a sec-butyl ester group, or t-butyl alkyl group can be used.

R₃ in the above general formula (1) is hydrogen or an alkyl group having 10 or less carbon atoms. The alkyl group is not particularly limited, but hydrogen, or any alkyl group such as a methyl group, an ethyl group, a benzyl group, an n-propyl group, an isopropyl group, an n-butyl group, an isobutyl group, a sec-butyl group, or a t-butyl group can be used. Above all, it is particularly preferably hydrogen or a methyl group.

The compound having the functional group (1) can be obtained by allowing an ester compound, which has a structure of the following general formula (4) corresponding to the structure represented by the above general formula (1), and in which an active group X is introduced at the α-position of a carbonyl group:

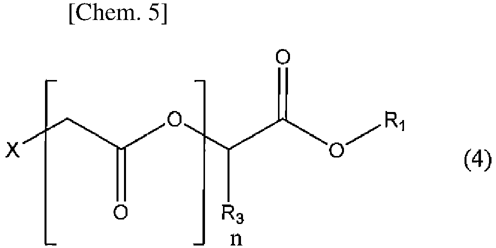

(X represents a halogen or a hydroxy group) to react with a carboxylic acid or a carboxylate salt. This can be expressed by a general formula as follows.

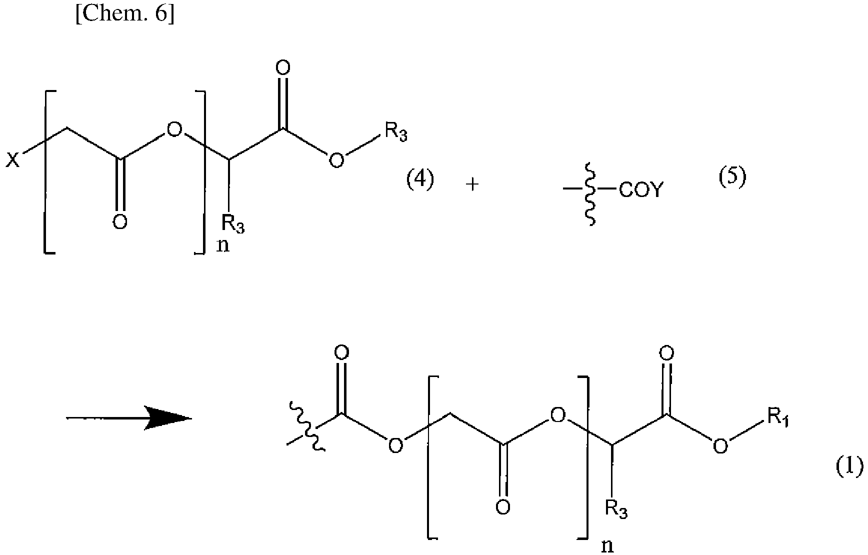

In the above general formula, a compound that can be used as a raw material represented by the general formula (5) is not particularly limited as long as it is a carboxylic acid or a carboxylic acid derivative capable of causing the above-mentioned reaction. As the carboxylic acid derivative, one in which Y is OM (carboxylate salt), OC=OR (acid anhydride), Cl (acid chloride), or the like can be exemplified. In the case of a carboxylate salt in which the above-mentioned Y = OM, examples of the carboxylate salt include a sodium salt, a potassium salt, an amine salt, a zinc salt, and the like.

The compound represented by the above general formula (4) can be a compound having a backbone corresponding to the structure (a) represented by the target general formula (1).

The production method for the compound represented by the above general formula (4) is not particularly limited. Among the compounds represented by the above general formula (4), a compound in which n = 0 is a compound having an active group represented by X at the α-position, and various α-hydroxy acids and α-halogenated carboxylic acids can be exemplified. Specifically, methyl chloroacetate, ethyl chloroacetate, methyl bromoacetate, ethyl bromoacetate, t-butyl bromoacetate, methyl 2-chloropropionate, methyl glycolate, methyl lactate, ethyl lactate, butyl lactate and the like can be exemplified.

Among the compounds represented by the above general formula (4), for a compound in which n = 1 or more, an example of the production method therefor is shown below.

The content shown below is an example of the production method, and the present invention is not limited to the compounds obtained by the following production method.

For example, it can be obtained by a reaction of a carboxylic acid having a halogen at the α-position, a salt thereof, or a derivative thereof with a carboxylic acid alkyl ester having a halogen or a hydroxy group at the α-position. This can be expressed by a general formula as follows.

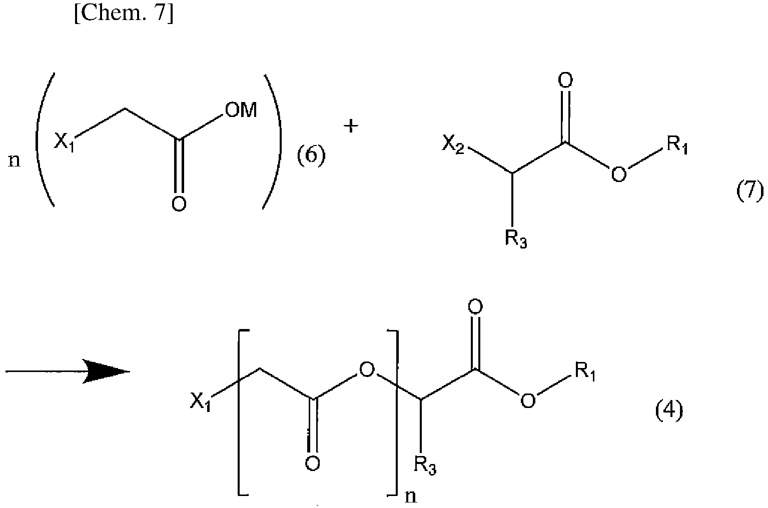

Examples of the carboxylic acid having a halogen at the α-position, the salt thereof, or the derivative thereof include alkali metal salts (potassium salts, sodium salts, etc.) of carboxylic acids, acid anhydrides, acid chlorides, and the like. As the compound represented by the above general formula (5), specifically, sodium chloroacetate or the like can be used.

Examples of the carboxylic acid alkyl ester having a halogen or a hydroxy group at the α-position include alkyl esters of α-substituted carboxylic acid compounds such as chloroacetic acid, bromoacetic acid, and lactic acid. The alkyl group of the alkyl ester is not particularly limited, and may be any alkyl group having 1 to 50 carbon atoms.

Such an alkyl group may be any of primary to tertiary, and specifically, a methyl group, an ethyl group, a benzyl group, an n-propyl group, an isopropyl group, an n-butyl group, an isobutyl group, a sec-butyl group, a t-butyl group, and the like can be exemplified.

In the above reaction, it is preferable that X₁ and X₂ are of different types. It is preferable to select a combination of functional groups as the functional groups of different types so that the reactivity is different and X₁ remains unreacted. Specifically, a combination of a bromo group as X₁ and a chloro group as X₂ is particularly preferable.

Further, the value of n can be adjusted by adjusting the mixing ratio of the two types of raw materials in the above reaction. In the above reaction, it is generally obtained as a mixture of multiple types of compounds having different n. As the compound represented by the above general formula (4), only a compound having a specific value of n may be used by performing purification, or it may be a mixture of multiple types of compounds having different values of n.

The chemical structure represented by the above general formula (1) can be formed by allowing the compound represented by the above general formula (4) to react with various carboxylic acid compounds. Therefore, the compound represented by the above general formula (4) can be allowed to react with any "compound having a carboxylate group", and as the compound having a chemical structure represented by the above general formula (1), a great many types of compounds are conceivable.

In the present invention, the reason why the thermosetting resin composition having remarkably excellent transesterification reactivity is obtained can be inferred to be derived from the structure represented by the above general formula (1), and therefore, the "compound having a carboxylate group" is not particularly limited, and any compound can be exemplified.

Further, the "compound having a carboxylate group" is preferably a compound having two or more functional groups. The "compound having two or more functional groups" means having two or more functional groups involved in a crosslinking reaction in the present invention, and specifically, may be a compound having two or more carboxylate groups or may be a compound further having a hydroxy group or a compound having a polymerizable unsaturated bond.

When it is used as a resin composition, it is preferable to use a compound having two or more functional groups so as to cause a crosslinking reaction. Therefore, with respect to the resin composition, in order to obtain such a resin, it is preferable to use the "compound having a carboxylate group" having two or more functional groups represented by the above general formula (1), or having a functional group other than the compound represented by the above general formula (1).

When the compound represented by the above general formula (2) is allowed to react with (meth)acrylic acid, the compound represented by the following general formula (3) is obtained.

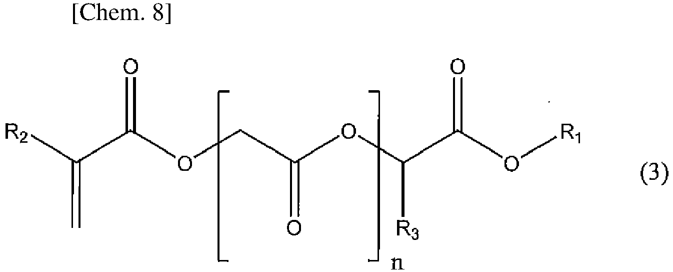

(In the formula, R₁ is an alkyl group having 50 or less carbon atoms,
R2 is hydrogen or a methyl group, and
n is 1 to 20)

R₁ in the resin of the present invention may be any of primary, secondary, and tertiary as long as it has 50 or less carbon atoms. However, it is more preferably primary or secondary, and is most preferably primary.

Since the compound represented by the above general formula (3) has an unsaturated double bond, various polymers can be obtained by polymerization of the unsaturated double bond. Such a polymer can also be suitably used in the thermosetting resin composition of the present invention. This point will be described in detail below.

Further, for example, when the carboxylate group in citric acid is configured to have the structure represented by the above general formula (1), it becomes a structure represented as follows.

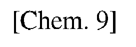

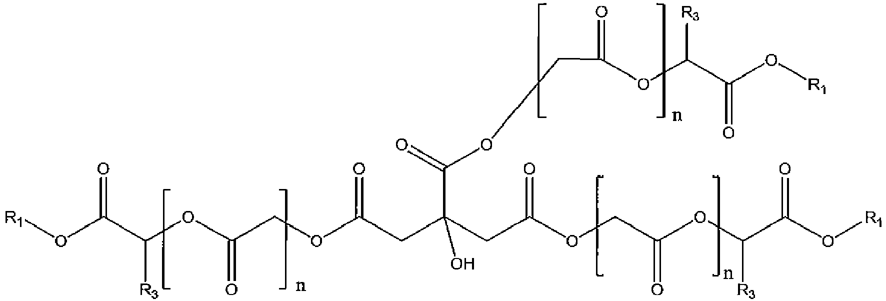

That is, for such a polycarboxylic acid, the above-mentioned reaction is carried out, and a compound having a plurality of structures represented by the above general formula (1) can also be obtained. Such a compound can also be suitably used for the object of the present invention.

From the above viewpoint, as a preferable embodiment of the compound having the structure represented by the general formula (1) in the present invention, specifically, the following two types can be exemplified:
(A-1) One using a polymer having a monomer as represented by the above general formula (3) as a constituent unit; and
(A-2) One using a compound containing two or more structures represented by the above general formula (1) obtained by a reaction of a polycarboxylic acid.

Hereinafter, each of these will be described in detail. It does not matter if it is a composition containing both of the above components (A-1) and (A-2).

Further, in both cases of the above (A-1) and (A-2), it is essential that the hydroxy group (b) be present in the thermosetting resin composition in order to allow the curing reaction to proceed.

In this case, it does not matter if it is in any form of:
(i) a compound having both the structure (a) represented by the above general formula (1) and a hydroxy group;
(ii) a mixture of a compound having the structure (a) represented by the above general formula (1) and a compound having a hydroxy group; and
(iii) the above (i) and a compound having the structure represented by the above general formula (1), and/or a compound having a hydroxy group.

### (A-1) Polymer Having Constituent Unit Based on Monomer Represented by Above General Formula (3) as Essential Unit

The polymer having a monomer represented by the above general formula (3) as a constituent unit can be suitably used as a component of the thermosetting resin composition of the present invention.

Further, the polymer in this case may be in any form of the above (i) to (iii). When a polymer having a hydroxy group is used, by appropriately combining a monomer containing a hydroxy group described in detail below, a resin according to the purpose can be formed.

The monomer represented by the above general formula (3) is preferably blended in a proportion of 5 to 95 wt% of the polymer.

By setting the proportion within the range, the above-mentioned purpose can be suitably achieved.

The polymer used in the present invention can be a homopolymer or a copolymer composed only of the monomer represented by the above general formula (3), or can be a copolymer using another monomer.

Such another monomer that can be used in the polymer is not particularly limited, and any monomer can be used as long as it is a monomer having a polymerizable unsaturated group. The monomers that can be used are illustrated below.
Various (meth)acrylate esters such as methyl (meth)acrylate, ethyl (meth)acrylate, n-propyl (meth)acrylate, benzyl (meth)acrylate, isopropyl (meth)acrylate, n-butyl (meth)acrylate, isobutyl (meth)acrylate, sec-butyl (meth)acrylate, and t-butyl (meth)acrylate;
various α-olefins such as ethylene, propylene, or butene-1;
various halogenated olefins excluding fluoroolefins such as vinyl chloride or vinylidene chloride;
various aromatic vinyl compounds such as styrene, α-methylstyrene, or vinyltoluene; various amino group-containing amide-based unsaturated monomers such as N-dimethylaminoethyl (meth)acrylamide, N-diethylaminoethyl (meth)acrylamide, N-dimethylaminopropyl (meth)acrylamide, or N-diethylaminopropyl (meth)acrylamide;
various dialkylaminoalkyl (meth)acrylates such as dimethylaminoethyl (meth)acrylate or diethylaminoethyl (meth)acrylate; various amino group-containing monomers such as tert-butylaminoethyl (meth)acrylate, tert-butylaminopropyl (meth)acrylate, aziridinylethyl (meth)acrylate, pyrrolidinylethyl (meth)acrylate, or piperidinylethyl (meth)acrylate;
various carboxyl group-containing monomers such as (meth)acrylic acid, crotonic acid, itaconic acid, maleic acid, or fumaric acid; various epoxy group-containing monomers such as glycidyl (meth)acrylate, β-methylglycidyl (meth)acrylate, or (meth)allyl glycidyl ether; mono-or di-esters of various α,β-unsaturated dicarboxylic acids such as maleic acid, fumaric acid, or itaconic acid, and a monohydric alcohol having 1 to 18 carbon atoms;
various monomers containing a hydrolyzable silyl group such as vinyltrimethoxysilane, vinyltriethoxysilane, vinyltripropoxysilane, vinylmethyldiethoxysilane, vinyltris(β-methoxyethoxy)silane, allyltrimethoxysilane, trimethoxysilylethyl vinyl ether, triethoxysilylethyl vinyl ether, methyldimethoxysilylethyl vinyl ether, trimethoxysilylpropyl vinyl ether, triethoxysilylpropyl vinyl ether, methyldiethoxysilylpropyl vinyl ether, γ-(meth)acryloyloxypropyltrimethoxysilane, γ-(meth)acryloyloxypropyltriethoxysilane, or γ-(meth)acryloyloxypropylmethyldimethoxysilane;
various fluorine-containing α-olefins such as vinyl fluoride, vinylidene fluoride, trifluoroethylene, tetrafluoroethylene, chlorotrifluoroethylene, bromotrifluoroethylene, pentafluoropropylene, or hexafluoropropylene; or various fluorine atom-containing monomers such as various perfluoroalkyl/perfluorovinyl ethers or (per)fluoroalkyl vinyl ethers (provided that the number of carbon atoms of the alkyl group shall be within a range of 1 to 18) such as trifluoromethyl trifluorovinyl ether, pentafluoroethyl trifluorovinyl ether, or heptafluoropropyl trifluorovinyl ether;
various alkyl vinyl ethers or substituted alkyl vinyl ethers such as methyl vinyl ether, ethyl vinyl ether, n-propyl vinyl ether, isopropyl vinyl ether, n-butyl vinyl ether, isobutyl vinyl ether, tert-butyl vinyl ether, n-pentyl vinyl ether, n-hexyl vinyl ether, n-octyl vinyl ether, 2-ethylhexyl vinyl ether, chloromethyl vinyl ether, chloroethyl vinyl ether, benzyl vinyl ether, or phenylethyl vinyl ether;
various cycloalkyl vinyl ethers such as cyclopentyl vinyl ether, cyclohexyl vinyl ether, or methyl cyclohexyl vinyl ether; vinyl-2,2-dimethylpropanoate, vinyl-2,2-dimethylbutanoate, vinyl-2,2-dimethylpentanoate, vinyl-2,2-dimethylhexanoate, vinyl-2-ethyl-2-methylbutanoate, vinyl-2-ethyl-2-methylpentanoate, vinyl-3-chloro-2,2-dimethylpropanoate, and further, various aliphatic vinyl carboxylates such as vinyl acetate, vinyl propionate, vinyl butyrate, vinyl isobutyrate, vinyl caproate, vinyl caprylate, vinyl caprate, or vinyl laurate, C9 branched aliphatic vinyl carboxylates, C₁₀ branched aliphatic vinyl carboxylates, C11 branched aliphatic vinyl carboxylates, or vinyl stearate; or vinyl esters of carboxylic acids having a cyclic structure such as vinyl cyclohexanecarboxylate, vinyl methyl cyclohexanecarboxylate, vinyl benzoate, or vinyl p-tert-butyl benzoate, and the like can be exemplified.

The hydroxy group-containing monomer is not particularly limited, and examples thereof include the following monomers:
various hydroxy group-containing vinyl ethers such as 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 2-hydroxy-2-methylpropyl vinyl ether, 5-hydroxypentyl vinyl ether, or 6-hydroxyhexyl vinyl ether; or addition reaction products of these various vinyl ethers listed above with ε-caprolactone;
various hydroxy group-containing allyl ethers such as 2-hydroxyethyl (meth)allyl ether, 3-hydroxypropyl (meth)allyl ether, 2-hydroxypropyl (meth)allyl ether, 4-hydroxybutyl (meth)allyl ether, 3-hydroxybutyl (meth)allyl ether, 2-hydroxy-2-methylpropyl (meth)allyl ether, 5-hydroxypentyl (meth)allyl ether, or 6-hydroxyhexyl (meth)allyl ether; or addition reaction products of these various allyl ethers listed above with ε-caprolactone;
or various hydroxy group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol mono(meth)acrylate, or polypropylene glycol mono(meth)acrylate; or addition reaction main components of these various (meth)acrylates listed above with ε-caprolactone, and the like.

Further, when the hydroxy group-containing monomer as the monomer does not directly have a hydroxy group but has a hydroxy group through a linker chain having 5 or more molecules, the hydroxy group easily moves in the resin, which is preferable in that a reaction is likely to occur.

Further, the monomer having an unsaturated group and an alkyl ester group described in the above-mentioned PTL 3 (WO 2019/139069) can also be used in combination.

In the present invention, by combining and polymerizing the above-mentioned various monomers according to need, a compound having both the structure represented by the above general formula (1) and a hydroxy group, a compound having the structure (a) represented by the above general formula (1), and a compound having a hydroxy group can be formed. Further, the above-mentioned functional groups required for making a resin water soluble can also be combined at a required ratio according to the purpose and introduced into the resin.

The production method for the polymer is not particularly limited, and the polymer can be produced by polymerization using a known method. More specifically, polymerization methods such as a solution polymerization method in an organic solvent, an emulsion polymerization method in water, a miniemulsion polymerization method in water, an aqueous solution polymerization method, a suspension polymerization method, and a UV curing method can be exemplified.

Further, when solution polymerization in an organic solvent is performed, by performing a known operation to achieve conversion into an aqueous form thereafter, it may be made into a form that can be used in the aqueous thermosetting resin composition of the present invention.

Further, it may be one in which a hydroxy group and/or the structure (a) represented by the above general formula (1) is introduced into a side chain by causing a reaction of a side chain functional group of a polymer obtained by polymerizing a composition containing the above-mentioned monomer. The reaction with the side chain is not particularly limited, and transesterification, a reaction with an isocyanate, a reaction with epoxy, a reaction with silane, a reaction with a melamine resin, an addition reaction, hydrolysis, dehydration condensation, a substitution reaction, and the like can be exemplified.

The molecular weight of the polymer is not particularly limited, and for example, the weight average molecular weight can be set to 3,000 to 1,000,000. The upper limit of the weight average molecular weight is more preferably 300,000, still more preferably 100,000, and yet still more preferably 50,000. The lower limit of the weight average molecular weight is more preferably 3,000, and still more preferably 4,000.

A water-soluble acrylic resin having a weight average molecular weight in a range of generally 5,000 to 100,000, preferably 5,000 to 50,000, or acrylic resin particles that are dispersoids of an acrylic resin emulsion having a weight average molecular weight of 50,000 or more, preferably 100,000 or more can be exemplified.

The aqueous acrylic resin desirably contains a hydroxy group, and preferably has a hydroxyl value in a range of generally 20 to 200 mgKOH/g, particularly 20 to 150 mgKOH/g from the viewpoint of water dispersibility or compatibility with other components, curability of a coating film to be formed, or the like. In addition, the aqueous acrylic resin preferably has an acid value in a range of generally 1 to 100 mgKOH/g, particularly 10 to 70 mgKOH/g.

### (A-2) Compound Having Structure Represented by Above General Formula (1) Obtained by Reaction of Carboxylic Acid

As described above, a compound in which a carboxylate group of a compound having a carboxylate group is converted into the structure represented by the above general formula (1) can also be used. Such a compound can be obtained by allowing a carboxylic acid or a derivative thereof with the compound represented by the above general formula (2).

For use in the thermosetting resin composition of the present invention, it is preferably a compound having two or more functional groups, and a polycarboxylic acid having two or more carboxyl groups, a hydroxycarboxylic acid having a carboxyl group and a hydroxy group, or the like can be used.

Various polycarboxylic acids are general-purpose raw materials that are widely and inexpensively provided in many applications such as a polyester raw material, a polyamide raw material, a neutralizer, a synthetic raw material, and others. A compound obtained by alkyl esterification of such a polycarboxylic acid using a known method can also be used in the present invention.

When such a compound is used as a compound having an alkyl ester group, it can be inexpensively esterified by a known method, and a polyvalent ester group with a relatively low molecular weight can be introduced. Further, by esterification, the compatibility with an organic solvent is improved and the product can be suitably used, which is preferable.

The polycarboxylic acid used here is not particularly limited, and for example, one having 50 or less carbon atoms can be used.

More specifically, aliphatic polyvalent carboxylic acids such as malonic acid, succinic acid, glutaric acid, adipic acid, pimelic acid, suberic acid, azelaic acid, sebacic acid, undecanedioic acid, dodecanedioic acid, brassylic acid, octadecanedioic acid, citric acid, and butanetetracarboxylic acid;
alicyclic polyvalent carboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, and 1,3,5-cyclohexanetricarboxylic acid;
aromatic polyvalent carboxylic acids such as phthalic acid, isophthalic acid, terephthalic acid, naphthalenedicarboxylic acid, 4,4'-biphenyldicarboxylic acid, trimellitic acid, and pyromellitic acid;
fatty acids such as palm oil fatty acid, cotton seed oil fatty acid, hemp seed oil fatty acid, rice bran oil fatty acid, fish oil fatty acid, tall oil fatty acid, soybean oil fatty acid, flaxseed oil fatty acid, tung oil fatty acid, rapeseed oil fatty acid, castor oil fatty acid, dehydrated castor oil fatty acid, and safflower oil fatty acid; monocarboxylic acids such as lauric acid, myristic acid, palmitic acid, stearic acid, oleic acid, linoleic acid, linolenic acid, benzoic acid, p-tert-butyl benzoic acid, cyclohexanoic acid, and 10-phenyloctadecanoic acid; and hydroxycarboxylic acids such as lactic acid, 3-hydroxybutanoic acid, and 3-hydroxy-4-ethoxybenzoic acid;
and the like can be exemplified.

The compound in which the carboxylate group of the polycarboxylic acid is substituted with the structure represented by the above general formula (1) preferably has a molecular weight of 10,000 or less. Such a structure is preferable in that the molecule is easy to move and the curing proceeds. The molecular weight may also be set to a lower molecular weight such as 6,000 or less, 4000 or less, or 2000 or less.

### (Compound Containing Hydroxy Group)

In the resin component (A) of the present invention, a hydroxy group is essential. Here, the hydroxy group may be present in the compound having the structure represented by the above-mentioned general formula (1), or a hydroxy group-containing compound may be used separately.

Hereinafter, the compound that can be used when the compound containing a hydroxy group is blended separately from the compound having the structure represented by the above general formula (1) will be illustrated.

### Acrylic Polyol (A-3)

An acrylic polyol can be produced by, for example, copolymerizing a hydroxy group-containing polymerizable unsaturated monomer (a₁) and another polymerizable unsaturated monomer (a₂) copolymerizable with the above (a₁) using a known method. More specifically, polymerization methods such as a solution polymerization method in an organic solvent, an emulsion polymerization method in water, a miniemulsion polymerization method in water, and an aqueous solution polymerization method can be exemplified.

The hydroxy group-containing polymerizable unsaturated monomer (a₁) is a compound having one or more hydroxy groups and one or more polymerizable unsaturated bonds in one molecule. The hydroxy group-containing polymerizable unsaturated monomer (a₁) is not particularly limited. Particularly representative examples of such a hydroxy group-containing vinyl monomer are illustrated below: various hydroxy group-containing vinyl ethers such as 2-hydroxyethyl vinyl ether, 3-hydroxypropyl vinyl ether, 2-hydroxypropyl vinyl ether, 4-hydroxybutyl vinyl ether, 3-hydroxybutyl vinyl ether, 2-hydroxy-2-methylpropyl vinyl ether, 5-hydroxypentyl vinyl ether, or 6-hydroxyhexyl vinyl ether; or addition reaction products of these various vinyl ethers listed above with ε-caprolactone;
various hydroxy group-containing allyl ethers such as 2-hydroxyethyl (meth)allyl ether, 3-hydroxypropyl (meth)allyl ether, 2-hydroxypropyl (meth)allyl ether, 4-hydroxybutyl (meth)allyl ether, 3-hydroxybutyl (meth)allyl ether, 2-hydroxy-2-methylpropyl (meth)allyl ether, 5-hydroxypentyl (meth)allyl ether, or 6-hydroxyhexyl (meth)allyl ether; or addition reaction products of these various allyl ethers listed above with ε-caprolactone;
or various hydroxy group-containing (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, polyethylene glycol mono(meth)acrylate, or polypropylene glycol mono(meth)acrylate; or addition reaction main components of these various (meth)acrylates listed above with ε-caprolactone, and the like.

As another polymerizable unsaturated monomer (a₂) copolymerizable with the hydroxy group-containing polymerizable unsaturated monomer (a₁), for example, the following monomers (i) to (xix), and the like, and any combination thereof are exemplified.
(i) Alkyl or cycloalkyl (meth)acrylates:
   for example, methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, n-hexyl (meth)acrylate, n-octyl (meth)acrylate, 2-ethylhexyl (meth)acrylate, nonyl (meth)acrylate, tridecyl (meth)acrylate, lauryl (meth)acrylate, stearyl (meth)acrylate, isostearyl (meth)acrylate, cyclohexyl (meth)acrylate, methylcyclohexyl (meth)acrylate, tert-butylcyclohexyl (meth)acrylate, cyclododecyl (meth)acrylate, tricyclodecanyl (meth)acrylate, etc.
(ii) Polymerizable unsaturated monomers having an isobornyl group:
   isobornyl (meth)acrylate, etc.
(iii) Polymerizable unsaturated monomers having an adamantyl group:
   adamantyl (meth)acrylate, etc.
(iv) Polymerizable unsaturated monomers having a tricyclodecenyl group:
   tricyclodecenyl (meth)acrylate, etc.
(v) Aromatic ring-containing polymerizable unsaturated monomers:
   benzyl (meth)acrylate, styrene, α-methylstyrene, vinyltoluene, etc.
(vi) Polymerizable unsaturated monomers having an alkoxysilyl group:
   vinyltrimethoxysilane, vinyltriethoxysilane, vinyl tris(2-methoxyethoxy)silane, γ-(meth)acryloyloxypropyltrimethoxysilane, γ-(meth)acryloyloxypropyltriethoxysilane, etc.
(vii) Polymerizable unsaturated monomers having a fluorinated alkyl group:
   perfluoroalkyl (meth)acrylates such as perfluorobutylethyl (meth)acrylate and perfluorooctylethyl (meth)acrylate; fluoroolefins, etc.
(viii) Polymerizable unsaturated monomers having a photopolymerizable functional group such as a maleimide group
(ix) Vinyl compounds:
   N-vinylpyrrolidone, ethylene, butadiene, chloroprene, vinyl propionate, vinyl acetate, etc.
(x) Carboxyl group-containing polymerizable unsaturated monomers:
   (meth)acrylic acid, maleic acid, crotonic acid, β-carboxyethyl acrylate, etc.
(xi) Nitrogen-containing polymerizable unsaturated monomers:
   (meth)acrylonitrile, (meth)acrylamide, N,N-dimethylaminoethyl (meth)acrylate, N,N-diethylaminoethyl (meth)acrylate, N,N-dimethylaminopropyl (meth)acrylamide, methylenebis(meth)acrylamide , ethylenebis(meth)acrylamide, adducts of glycidyl (meth)acrylate and an amine compound, etc.
(xii) Polymerizable unsaturated monomers having two or more polymerizable unsaturated groups in one molecule:
   allyl (meth)acrylate, 1,6-hexanediol di(meth)acrylate, etc.
(xiii) Epoxy group-containing polymerizable unsaturated monomers:
   glycidyl (meth)acrylate, β-methylglycidyl (meth)acrylate, 3,4-epoxycyclohexylmethyl (meth)acrylate, 3,4-epoxycyclohexylethyl (meth)acrylate, 3,4-epoxycyclohexylpropyl (meth)acrylate, allyl glycidyl ether, etc.
(xiv) (Meth)acrylates having a polyoxyethylene chain containing an alkoxy group at a molecular end
(xv) Polymerizable unsaturated monomers having a sulfonate group:
   2-acrylamide-2-methylpropanesulfonic acid, 2-sulfoethyl (meth)acrylate, allylsulfonic acid, 4-styrenesulfonic acid, etc.; sodium salts and ammonium salts of these sulfonic acids, etc.
(xvi) Polymerizable unsaturated monomers having a phosphate group:
   acid phosphooxyethyl (meth)acrylate, acid phosphooxypropyl (meth)acrylate, acid phosphooxypoly(oxyethylene) glycol (meth)acrylate, acid phosphooxypoly(oxypropylene) glycol (meth)acrylate, etc.
(xvii) Polymerizable unsaturated monomers having a UV-absorbing functional group:
   2-hydroxy-4-(3-methacryloyloxy-2-hydroxypropoxy)benzophenone, 2-hydroxy-4-(3-acryloyloxy-2-hydroxypropoxy)benzophenone, 2,2'-dihydroxy-4-(3-methacryloyloxy-2-hydroxypropoxy)benzophenone, 2,2'-dihydroxy-4-(3-acryloyloxy-2-hydroxypropoxy)benzophenone, 2-(2'-hydroxy-5'-methacryloyloxyethylphenyl)-2H-benzotriazole, etc.
(xviii) UV-stable polymerizable unsaturated monomers:
   4-(meth)acryloyloxy-1,2,2,6,6-pentamethylpiperidine, 4-(meth)acryloyloxy-2,2,6,6-tetramethylpiperidine, 4-cyano-4-(meth)acryloylamino-2,2,6,6-tetramethylpiperidine, 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 4-crotonoyloxy-2,2,6,6-tetramethylpiperidine, 4-crotonoylamino-2,2,6,6-tetramethylpiperidine, 1-crotonoyl-4-crotonoyloxy-2,2,6,6-tetramethylpiperidine, etc.
(xix) Polymerizable unsaturated monomers having a carbonyl group:
   acrolein, diacetone acrylamide, diacetone methacrylamide, acetoacetoxyethyl methacrylate, formylstyrol, vinyl alkyl ketones having about 4 to about 7 carbon atoms (for example, vinyl methyl ketone, vinyl ethyl ketone, and vinyl butyl ketone), etc.

In the present specification, the "polymerizable unsaturated group" means an unsaturated group that can undergo radical polymerization or ionic polymerization. Examples of the polymerizable unsaturated group include a vinyl group, a (meth)acryloyl group, and the like.

The proportion of the hydroxy group-containing polymerizable unsaturated monomer (a₁) when producing the acrylic polyol (A-3) is preferably 0.5 to 50 wt% based on the total amount of the monomer components. By setting it within such a range, an appropriate crosslinking reaction can be caused, and excellent coating film physical properties can be obtained.

The lower limit is more preferably 1.0 wt%, and still more preferably 1.5 wt%. The upper limit is more preferably 40 wt%.

The hydroxyl value of the acrylic polyol (A-3) is preferably 1 to 200 mgKOH/g from the viewpoint of water resistance of a coating film to be formed, and the like. The lower limit is more preferably 2 mgKOH/g, and still more preferably 5 mgKOH/g. The upper limit is more preferably 180 mgKOH/g, and still more preferably 170 mgKOH/g.

As such an acrylic polyol (A-3), a commercially available product can also be used. The commercially available product is not particularly limited, and examples thereof include ACRYDIC A-801-P, A-817, A-837, A-848-RN, A-814, 57-773, A-829, 55-129, 49-394-IM, A-875-55, A-870, A-871, A-859-B, 52-668-BA, WZU-591, WXU-880, BL-616, CL-1000, and CL-408 manufactured by DIC Corporation, and the like.

Further, in the thermosetting coating material of the present invention, the ester group in the ester compound (A) can be arbitrarily blended with respect to the number of hydroxy groups derived from the acrylic polyol (A-3), but when the ester group is a tertiary ester, it is preferably 1 to 200% (number ratio).

### Polyester Polyol (A-4)

The polyester polyol (A-4) can usually be produced by an esterification reaction or a transesterification reaction of an acid component and an alcohol component.

Examples of the acid component include compounds usually used as an acid component when producing a polyester resin. Examples of the acid component include an aliphatic polybasic acid, an alicyclic polybasic acid, an aromatic polybasic acid, and an anhydride and an esterified product thereof.

Further, the polyester resin may be a reaction product of an α-olefin epoxide such as propylene oxide or butylene oxide, a monoepoxy compound such as Cardura E10 (trade name, manufactured by Japan Epoxy Resin Co., Ltd., synthetic highly branched saturated fatty acid glycidyl ester), or the like with an acid group of a polyester resin.

Further, the polyester resin may be a urethane-modified polyester resin.

The polyester resin can have a weight average molecular weight in a range of 2,000 to 100,000, preferably 3,000 to 30,000. The weight average molecular weight of the polyester resin can be measured by the same method as the weight average molecular weight of the acrylic resin described above.

The aliphatic polybasic acid and the anhydride and esterified product thereof are generally an aliphatic compound having two or more carboxyl groups in one molecule, an acid anhydride of the aliphatic compound, and an esterified product of the aliphatic compound, and examples thereof include aliphatic polyvalent carboxylic acids such as succinic acid, glutaric acid, adipic acid, pimelic acid, suberic acid, azelaic acid, sebacic acid, undecanedioic acid, dodecanedioic acid, brassylic acid, octadecanedioic acid, citric acid, and butanetetracarboxylic acid; anhydrides of the aliphatic polyvalent carboxylic acids; esterified products of lower alkyl having about 1 to about 4 carbon atoms of the aliphatic polyvalent carboxylic acids, and the like, and any combination thereof.

The aliphatic polybasic acid is preferably adipic acid and/or adipic anhydride from the viewpoint of the smoothness of a coating film to be obtained.

As the alicyclic polybasic acid, and the anhydride and esterified product thereof, a compound having one or more alicyclic structures and two or more carboxyl groups in one molecule, an acid anhydride of the compound and an esterified product of the compound are generally exemplified. The alicyclic structure is mainly a 4- to 6-membered ring structure. Examples of the alicyclic polybasic acid and the anhydride and esterified product thereof include alicyclic polyvalent carboxylic acids such as 1,2-cyclohexanedicarboxylic acid, 1,3-cyclohexanedicarboxylic acid, 1,4-cyclohexanedicarboxylic acid, 4-cyclohexene-1,2-dicarboxylic acid, 3-methyl-1,2-cyclohexanedicarboxylic acid, 4-methyl-1,2-cyclohexanedicarboxylic acid, 1,2,4-cyclohexanetricarboxylic acid, and 1,3,5-cyclohexanetricarboxylic acid; anhydrides of the alicyclic polyvalent carboxylic acids; esterified products of lower alkyl having about 1 to about 4 carbon atoms of the alicyclic polyvalent carboxylic acids, and the like; and any combination thereof.

From the viewpoint of the smoothness of a coating film to be obtained, the alicyclic polybasic acid, and the anhydride and esterified product thereof are preferably 1,2-cyclohexanedicarboxylic acid, 1,2-cyclohexanedicarboxylic anhydride, 1,3-cyclohexanedicarboxylic acid, 1,4-cyclohexanedicarboxylic acid, 4-cyclohexene-1,2-dicarboxylic acid, and 4-cyclohexene-1,2-dicarboxylic anhydride, and more preferably 1,2-cyclohexane dicarboxylic acid and/or 1,2-cyclohexanedicarboxylic anhydride.

The aromatic polybasic acid and the anhydride and esterified product thereof are generally an aromatic compound having two or more carboxyl groups in one molecule, an acid anhydride of the aromatic compound, and an esterified product of the aromatic compound, and examples thereof include aromatic polyvalent carboxylic acids such as phthalic acid, isophthalic acid, terephthalic acid, naphthalene dicarboxylic acid, 4,4'-biphenyl dicarboxylic acid, trimellitic acid, and pyromellitic acid; acid anhydrides of the aromatic polyvalent carboxylic acids, esterified products of lower alkyl having about 1 to about 4 carbon atoms of the aromatic polyvalent carboxylic acids, and the like, and any combination thereof.

The aromatic polybasic acid and the anhydride and esterified product thereof are preferably phthalic acid, phthalic anhydride, isophthalic acid, trimellitic acid, and trimellitic anhydride.

Further, as the acid component, acid components other than the aliphatic polybasic acid, the alicyclic polybasic acid, and the aromatic polybasic acid, for example, fatty acids such as coconut oil fatty acid, cottonseed oil fatty acid, hemp oil fatty acid, rice bran oil fatty acid, fish oil fatty acid, Tall oil fatty acid, soybean oil fatty acid, linseed oil fatty acid, tung oil fatty acid, rapeseed oil fatty acid, castor oil fatty acid, dehydrated castor oil fatty acid, and safflower oil fatty acid; monocarboxylic acids such as lauric acid, myristic acid, palmitic acid, stearic acid, oleic acid, linoleic acid, linolenic acid, benzoic acid, p-tert-butylbenzoic acid, cyclohexanoic acid, and 10-phenyloctadecanoic acid; hydroxy carboxylic acids such as lactic acid, 3-hydroxybutanoic acid, and 3-hydroxy-4-ethoxybenzoic acid, and the like, and any combination thereof are exemplified.

Examples of the alcohol component include polyhydric alcohols having two or more hydroxy groups in one molecule, for example, dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 1,1,1-trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid; polylactone diols obtained by adding a lactone compound such as ε-caprolactone to the dihydric alcohols; ester diol compounds such as bis(hydroxyethyl) terephthalate; polyether diol compounds such as alkylene oxide adducts of bisphenol A, polyethylene glycol, polypropylene glycol, and polybutylene glycol; trihydric or higher hydric alcohols such as glycerin, trimethylolethane, trimethylolpropane, diglycerin, triglycerin, 1,2,6-hexanetriol, pentaerythritol, dipentaerythritol, tris(2-hydroxyethyl) isocyanurate, sorbitol, and mannitol; polylactone polyol compounds obtained by adding a lactone compound such as ε-caprolactone to the trihydric or higher hydric alcohols; fatty acid esterified products of glycerin, and the like.

Further, examples of the alcohol component include alcohol components other than the above-mentioned polyhydric alcohols, for example, monoalcohols such as methanol, ethanol, propyl alcohol, butyl alcohol, stearyl alcohol, and 2-phenoxyethanol; alcohol compounds obtained by a reaction of propylene oxide, butylene oxide, or a monoepoxy compound such as "Cardura E10" (trade name, manufactured by HEXION Specialty Chemicals, Inc., synthetic highly branched saturated fatty acid glycidyl ester) with an acid, and the like.

The polyester polyol is not particularly limited and can be produced according to a usual method. For example, the acid component and the alcohol component are heated in a nitrogen stream at about 150 to about 250°C for about 5 to about 10 hours to carry out an esterification reaction or a transesterification reaction of the acid component and the alcohol component, whereby the polyester polyol can be produced.

The carboxyl group of the polyester resin can be neutralized using the above-mentioned basic substance as needed.

The polyester resin desirably contains a hydroxy group, and preferably has a hydroxyl value in a range of generally 20 to 200 mgKOH/g, particularly 20 to 150 mgKOH/g from the viewpoint of water dispersibility or compatibility with other components, curability of a coating film to be formed, or the like. In addition, the polyester resin preferably has an acid value in a range of generally 1 to 100 mgKOH/g, particularly 10 to 70 mgKOH/g.

### Low Molecular Weight Polyol (A-5)

Further, a low molecular weight polyol (specifically, a molecular weight of 2,000 or less) may be used as a compound having at least two hydroxy groups in a molecule.

Examples of the low molecular weight polyol (A-5) include dihydric alcohols such as ethylene glycol, propylene glycol, diethylene glycol, trimethylene glycol, tetraethylene glycol, triethylene glycol, dipropylene glycol, 1,4-butanediol, 1,3-butanediol, 2,3-butanediol, 1,2-butanediol, 2-methyl-1,3-propanediol, 3-methyl-1,2-butanediol, 1,1,1-trimethylolpropane, 2-butyl-2-ethyl-1,3-propanediol, 1,2-pentanediol, 1,5-pentanediol, 1,4-pentanediol, 2,4-pentanediol, 2,3-dimethyltrimethylene glycol, tetramethylene glycol, 3-methyl-4,3-pentanediol, 3-methyl-1,5-pentanediol, 2,2,4-trimethyl-1,3-pentanediol, 1,6-hexanediol, 1,5-hexanediol, 1,4-hexanediol, 2,5-hexanediol, neopentyl glycol, 1,4-cyclohexanedimethanol, tricyclodecanedimethanol, hydroxypivalic acid neopentyl glycol ester, hydrogenated bisphenol A, hydrogenated bisphenol F, and dimethylolpropionic acid; polylactone diols obtained by adding a lactone compound such as ε-caprolactone to the dihydric alcohols; ester diol compounds such as bis(hydroxyethyl) terephthalate; polyether diol compounds such as alkylene oxide adducts of bisphenol A, polyethylene glycol, polypropylene glycol, and polybutylene glycol; trihydric or higher hydric alcohols such as glycerin, trimethylolethane, trimethylolpropane, diglycerin, triglycerin, 1,2,6-hexanetriol, pentaerythritol, dipentaerythritol, tris(2-hydroxyethyl) isocyanurate, sorbitol, and mannitol; and the like.

Such a low molecular weight polyol is known as a general-purpose product and can be obtained inexpensively. Further, the low molecular weight polyol has high water solubility and can be suitably used as a crosslinking agent when curing in an aqueous system is aimed.

### (Transesterification Catalyst (B))

The thermosetting resin composition of the present invention contains a transesterification catalyst (B). That is, the transesterification catalyst (B) is blended so as to efficiently cause a transesterification reaction between an ester group and a hydroxy group and obtain a sufficient thermosetting property.

As the transesterification catalyst (B), any known compound capable of activating the transesterification reaction can be used.

Specific examples thereof include various acidic compounds such as hydrochloric acid, sulfuric acid, nitric acid, acetic acid, phosphoric acid, or sulfonic acid, and heteropolyacids; various basic compounds such as LiOH, KOH, or NaOH, amines, and phosphines; various metal compounds such as PbO, magnesium oxide, zinc acetate, zinc acrylate, zinc trifluoromethanesulfonate, lead acetate, manganese acetate, copper acetate, nickel acetate, palladium acetate, aluminum isopropylate, zirconium acetylacetonate, iron chloride, cobalt chloride, palladium chloride, zinc dithiocarbamate, antimony trioxide, tetraisopropyl titanate, dibutyltin dilaurate, dibutyltin dioctate, monobutyltin acid, ytterbium trifluoromethanesulfonate, or scandium trifluoromethanesulfonate; quaternary ammonium salts such as tetramethyl ammonium chloride, dodecyl trimethyl ammonium bromide, triethyl benzyl ammonium chloride, tetramethyl ammonium hydroxide, and trimethyl benzyl ammonium methyl carbonate, phosphonium salts such as tetrabutylphosphonium bromide and tetrabutylphosphonium hydroxide, strong bases such as 1,8-diazabicyclo[5.4.0]undecene-7, and the like. Further, a photoresponsive catalyst or a thermal latent catalyst which generates an acid by light or heat can also be used. In addition, a zinc cluster catalyst (for example, ZnTAC24 (trade name) manufactured by Tokyo Chemical Industry Co., Ltd.) or the like can also be used.

Further, among the above-mentioned compounds, two or more types may be used in combination.

In the aqueous thermosetting resin composition of the present invention, it is more preferable to use at least one compound selected from the group consisting of a metal compound containing a metal other than an alkali metal and a basic catalyst as a catalyst. Further, it is most preferable to use a metal compound containing a metal other than an alkali metal as a part of the catalyst. In the aqueous thermosetting resin composition of the present invention, the metal compound is particularly excellent in terms of catalytic activity. The water-insoluble catalyst may be formed into a dispersion or may be dissolved in a water-soluble solvent and added. This tendency is particularly remarkable in an aqueous thermosetting resin composition having a primary or secondary alkyl ester group.

Further, in the thermosetting resin composition of the present invention, a good curing reaction can be caused even without using an acid catalyst, and therefore, it is also preferable in that it can be a thermosetting resin composition to which a basic compound is added.

That is, an amine compound is sometimes used as an additive such as a pigment dispersant. Further, when the coating material is converted into an aqueous form, an operation in which an acid group such as a carboxylate group or a sulfonate group is introduced into a resin and neutralized with an amine compound or the like to make the resin water soluble is widely performed. In this case, it was difficult to use it in combination with an acidic catalyst. This was a problem that hinders the conversion into an aqueous form of the thermosetting resin composition that uses a transesterification catalyst in a curing reaction. In the present invention, curing can be carried out even under basic conditions, and therefore, conversion into an aqueous form can be achieved.

Further, even when the thermosetting resin composition of the present invention is used as a solvent-based coating material composition, an aqueous coating material is sometimes used in combination as a part of a multilayer coating film. In this case, when the multilayer coating film is simultaneously thermally cured, an amine, ammonia, or the like may be generated from other layers that form the multilayer coating film. Even in such a case, it is preferable in that good curing can be carried out.

The amount of the transesterification catalyst (B) used is preferably 0.01 to 50 wt% with respect to the total weight of the resin component (A). By setting it within such a range, a good curing reaction can be carried out at a low temperature, which is preferable.

Further, in the thermosetting resin composition of the present invention, a good curing reaction can be caused even without using an acid catalyst, and therefore, it is also preferable in that it can be a thermosetting resin composition to which a basic compound is added.

That is, an amine compound is sometimes used as an additive such as a pigment dispersant. Further, when the coating material is converted into an aqueous form, an operation in which an acid group such as a carboxylate group or a sulfonate group is introduced into a resin and neutralized with an amine compound or the like to make the resin water soluble is widely performed. In this case, it was difficult to use it in combination with an acidic catalyst. This was a problem that hinders the conversion into an aqueous form of the thermosetting resin composition that uses a transesterification catalyst in a curing reaction. In the present invention, curing can be carried out even under basic conditions, and therefore, conversion into an aqueous form can be achieved.

Further, even when the thermosetting resin composition of the present invention is used as a solvent-based coating material composition, an aqueous coating material is sometimes used in combination as a part of a multilayer coating film. In this case, when the multilayer coating film is simultaneously thermally cured, an amine, ammonia, or the like may be generated from other layers that form the multilayer coating film. Even in such a case, it is preferable in that good curing can be carried out.

The amount of the transesterification catalyst (B) used is preferably 0.01 to 50 wt% with respect to the total weight of the resin component (A). By setting it within such a range, a good curing reaction can be carried out at a low temperature, which is preferable.

Further, when the thermosetting resin composition is an aqueous composition, such a metal compound catalyst is preferably a water-soluble compound, a water-soluble dispersion, or an emulsion.

From the above viewpoint, the water-soluble metal compound catalyst that can be suitably used in the present invention is not particularly limited, and examples thereof include tramethyl ammonium chloride, dodecyl trimethyl ammonium bromide, triethyl benzyl ammonium chloride, tetramethyl ammonium hydroxide, trimethyl benzyl ammonium methyl carbonate, zinc acetate, zinc acrylate, 1,8-diazabicyclo[5.4.0]undecene-7, dibutyltin dilaurate, and the like.

In the thermosetting composition of the present invention, another crosslinking agent generally used in the field of coating materials or adhesives may be used in combination in addition to the above-mentioned components (A) and (B). The crosslinking agent that can be used is not particularly limited, and examples thereof include an isocyanate compound, a blocked isocyanate compound, a melamine resin, an epoxy resin, a silane compound, and the like. Further, vinyl ether, an anionic polymerizable monomer, a cationic polymerizable monomer, a radical polymerizable monomer, or the like may be used in combination. A curing agent for accelerating the reaction of the crosslinking agent used in combination may be used together.

The above-mentioned another crosslinking agent is not essential, and the aqueous thermosetting resin composition of the present invention is preferable in that good curability can be obtained even if it does not contain another crosslinking agent.

When the crosslinking agent is a polyisocyanate compound and/or a melamine resin, the blending amount with respect to the total amount of the resin component (A) and the crosslinking agent (that is, (the amount of the crosslinking agent) / (the amount of the crosslinking agent + the amount of the resin component) is preferably 0.01 to 50 wt%. When the blending amount is within such a range, a curing reaction by a transesterification reaction and a curing reaction by another curing agent are simultaneously caused, which is preferable.

The lower limit is more preferably 0.01 wt%, and still more preferably 1 wt%. The upper limit is more preferably 30 wt%, and still more preferably 20 wt%.

The thermosetting resin composition of the present invention may be an aqueous thermosetting resin composition or a solvent-based thermosetting resin composition. Further, it may be a thermosetting resin composition having solid properties such as a powder coating material.

When the thermosetting resin composition of the present invention is an aqueous thermosetting resin composition, it is particularly preferable in that low-temperature curing performance can be sufficiently obtained. That is, in a known aqueous thermosetting resin composition that uses a transesterification reaction as a curing reaction, the reactivity tends to decrease when a -COOH group is present. Therefore, when a resin was converted into an aqueous form by introducing a -COOH group into the resin, a sufficient curing reaction could not be caused unless the curability is enhanced by a method of enhancing the curing reaction or the like.

However, the compound having an alkyl ester group represented by the above general formula (1) can carry out a curing reaction at a relatively low temperature even in the presence of a -COOH group. Therefore, it can be suitably used also as an aqueous thermosetting resin composition.

For such an aqueous thermosetting resin composition, the following methods are generally known:
(a) a method for conversion into an aqueous form using a water-soluble or water-dispersible component; and
(b) a method for conversion into an aqueous form by emulsifying a water-insoluble component in water with an emulsifier.

Therefore, each of these methods will be described in detail. Among the components contained in the aqueous thermosetting resin composition, some components may be converted into an aqueous form by the method (a), and the other components may be converted into an aqueous form by the method (b).

### (a) Method for Conversion into Aqueous Form Using Water-Soluble or Water-Dispersible Component

In such a method, conversion into an aqueous form is performed by making an organic component itself that forms a coating film water soluble or water dispersible. When such a method is used, a coating material composition that does not use a surfactant can be formed, which is preferable.

The resin used in the aspect of the above (a) is not particularly limited, but a resin which has at least one acid group like a functional group selected from the group consisting of a carboxylate group, a sulfonate group, a sulfate group, and a phosphate group, and is made water soluble by neutralizing the acid group with ammonia and/or an amine compound to convert it into a hydrophilic group can be used. Further, it may use a compound which is a compound described in detail below and is water soluble. Among these, a carboxylate group is preferable from the viewpoint of being inexpensive or the like.

The resin having an acid group can be obtained by performing a known polymerization reaction using a monomer having these functional groups at least in part in an organic solvent. Thereafter, neutralization is performed by adding water and an amine and/or ammonia thereto to convert the resin into an aqueous form.

When conversion into an aqueous form is performed by neutralizing the acid group in this manner, generally, an acrylic polymer, a polyester resin, and a urethane resin can be most suitably used among various resins. In order to introduce a functional group having the above-mentioned acidic group into an acrylic resin, it is preferable to perform a polymerization reaction using a polymerizable monomer having an acid group as a part of the raw material.

In such a method, a material that can be used as the monomer having an acid group is not particularly limited, and a monomer that can be used can be selected according to the type of resin. Examples thereof include unsaturated group-containing carboxylic acid compounds such as (meth)acrylic acid, 2-methacryloxyethyl succinate, maleic acid, crotonic acid, and β-carboxyethyl acrylate, toluenesulfonic acid, 2-acrylamide-2-methylpropane sulfonic acid, 2-methacryloyloxyethyl acid phosphate, and the like.

In the above-mentioned polymer, such an acid group is preferably introduced so that the acid value of the resin is in a range of 0.1 to 100. The lower limit of the acid value is preferably 0.5, and more preferably 1. The upper limit of the acid value is preferably 50, and more preferably 30.

Examples of the amine compound include tertiary amines such as triethylamine, tributylamine, dimethylethanolamine, and triethanolamine; secondary amines such as diethylamine, dibutylamine, diethanolamine, and morpholine; primary amines such as propylamine, ethanolamine, and dimethylethanolamine; quaternary ammonium such as ammonia; and the like.

It is preferable that the amount used when the amine compound is used is usually in a range of 0.1 to 1.5 molar equivalents with respect to the carboxyl group in the unsaturated carboxylic acid or acid anhydride-modified polyolefin (i).

When the conversion into an aqueous form is performed by the above-mentioned method, it can be carried out by obtaining a resin using a method such as conventional solution polymerization, and thereafter adding water and an amine compound, followed by stirring.

### (b) Method for Conversion into Aqueous Form by Emulsifying Component in Water with Emulsifier

Unlike the above-mentioned method, the resin may be made water soluble by emulsification with an emulsifier.

In this case, the resin may be obtained by emulsion polymerization, or the resin obtained by solution polymerization or the like may be emulsified with an emulsifier. Further, as the emulsifier, a reactive emulsifier may be used.

Examples of the anionic reactive emulsifier include sodium salts, amine salts, and ammonium salts of sulfonic acid compounds having a polymerizable unsaturated group such as a (meth)allyl group, a (meth)acrylic group, a propenyl group, or a butenyl group, and the like. Since a coating film to be obtained has excellent water resistance, an ammonium salt of a sulfonic acid compound having a polymerizable unsaturated group is preferable among them. Examples of a commercially available product of the ammonium salt of a sulfonic acid compound include Latemul S-180A (manufactured by Kao Corporation, trade name), Aqualon KH10 (manufactured by DKS Co., Ltd., trade name), and the like.

Further, examples of a nonionic reactive emulsifier include one, which has a polymerizable unsaturated group such as a (meth)allyl group, a (meth)acrylic group, a propenyl group, or a butenyl group, and to which ethylene oxide or propylene oxide is added, and the like.

Further, among the ammonium salts of sulfonic acid compounds having a polymerizable unsaturated group, an ammonium salt of a sulfate ester compound having a polymerizable unsaturated group and a polyoxyalkylene group is more preferable. Examples of a commercially available product of the ammonium salt of a sulfate ester compound having a polymerizable unsaturated group and a polyoxyalkylene group include Aqualon KH-10 (manufactured by DKS Co., Ltd., trade name) and SR-1025A (manufactured by Asahi Denka Kogyo K.K., trade name), and the like.

The concentration of the emulsifier is usually in a range of 0.1 to 10 mass%, and particularly preferably in a range of 1 to 5 mass% based on the total amount of the radically polymerizable unsaturated monomer used.

The emulsified resin obtained by emulsion polymerization using a reactive emulsifier has an advantage that the inconvenience caused by the presence of an emulsifier does not occur because the emulsifier is incorporated in the resin. Therefore, in an application where the presence of an emulsifier is a problem, it is preferable to use the emulsified resin obtained by such a method.

As the emulsifier other than the above-mentioned reactive emulsifiers, for example, nonionic emulsifiers such as polyoxyethylene monooleyl ether, polyoxyethylene monostearyl ether, polyoxyethylene monolauryl ether, polyoxyethylene tridecyl ether, polyoxyethylene phenyl ether, polyoxyethylene nonylphenyl ether, polyoxyethylene octylphenyl ether, polyoxyethylene monolaurate, polyoxyethylene monostealate, polyoxyethylene monooleate, sorbitan monolaurate, sorbitan monostealate, sorbitan trioleate, and polyoxyethylene sorbitan monolaurate; anionic emulsifiers such as sodium salts, ammonium salts, etc. of alkylsulfonic acid, alkylbenzene sulfonic acid, and alkylphosphoric acid, and the like can be exemplified, and further, a polyoxyalkylene group-containing anionic emulsifier having an anionic group and a polyoxyalkylene group such as a polyoxyethylene group or a polyoxypropylene group in one molecule, a reactive anionic emulsifier having the anionic group and a polymerizable unsaturated group in one molecule, or the like can also be used. In addition, a polymeric emulsifier, quaternary ammonium, or the like can also be used. These can be used alone or two or more types can be used in combination.

The amount of the emulsifier used is usually 30 parts by mass or less, and particularly preferably in a range of 0.5 to 25 parts by mass with respect to 100 parts by mass of the solid content mass of the unsaturated carboxylic acid or acid anhydride-modified polyolefin (i).

Further, when the resin obtained by emulsion polymerization is used, the emulsion polymerization method is not particularly limited, and can be carried out by a known general method. Further, the emulsifier may be the above-mentioned reactive emulsifier or a general emulsifier.

Also when a method of emulsifying a resin obtained by a general method such as solution polymerization using an organic solvent with an emulsifier is performed, a specific method therefor is not particularly limited, and it can be carried out by a known general method. Examples of the emulsifier that can be used in this case include those described above as can be used for emulsion polymerization.

In addition, when using materials that are various ester compounds or polyhydric alcohols as described in detail below and are insoluble in water, such a material can be made water soluble by applying a known method such as a method of emulsifying it with an emulsifier or a method of solubilizing it using an organic solvent having high miscibility with water such as an alcohol in addition to water. Examples of the organic solvent having high miscibility with water that can be used in such a method include methanol, ethanol, isopropyl alcohol, butyl alcohol, butyl cellulose, an ether-based solvent, a ketone-based solvent, and the like.

The aqueous thermosetting resin composition of the present invention can be suitably used in the field of thermosetting coating materials, thermosetting adhesives, or the like.

The thermosetting resin composition of the present invention may contain, in addition to water, an aqueous solvent that can be mixed with water at a given ratio such as ethanol, methanol, an alcohol-based, glycol-based, ether-based, or ketone-based solvent.

When it is used as a thermosetting coating material, in addition to the above-mentioned respective components, an additive generally used in the field of coating materials may be used in combination. For example, a leveling agent, a defoaming agent, a reactive diluent, a non-aqueous dispersion coating material (NAD), a color pigment, an extender pigment, a bright pigment, or the like, a pigment dispersant, a rheology control agent, an antioxidant, a UV absorber, and any combination thereof may be used together.

When a pigment is used, it is preferably contained in a range of 1 to 500 wt% in total based on 100 wt% of the total solid content of the resin components. The lower limit is more preferably 3 wt%, and still more preferably 5 parts by weight. The upper limit is more preferably 400 wt%, and still more preferably 300 wt%.

Examples of the color pigment include titanium oxide, flowers of zinc, carbon black, molybdenum red, Prussian blue, cobalt blue, an azo-based pigment, a phthalocyanine-based pigment, a quinacridone-based pigment, isoindoline-based pigment, a threne-based pigment, a perylene-based pigment, a dioxazine-based pigment, a diketopyrrolopyrrole-based pigment, and the like, and any combination thereof.

As the extender pigment, for example, clay, kaolin, barium sulfate, barium carbonate, calcium carbonate, talc, silica, alumina white, and the like are exemplified, and barium sulfate and/or talc is preferable, and barium sulfate is more preferable.

Examples of the bright pigment include aluminum (including vapor-deposited aluminum), copper, zinc, brass, nickel, aluminum oxide, mica, aluminum oxide coated with titanium oxide or iron oxide, mica coated with titanium oxide or iron oxide, glass flakes, a hologram pigment, and the like, and any combination thereof. The aluminum pigment includes non-leafing type aluminum and leafing type aluminum.

The color pigment is preferably blended in the aqueous thermosetting resin composition in a state of being dispersed by a pigment dispersion resin. The amount of the color pigment may vary depending on the type of pigment or the like, but in general, it is preferably in a range of about 0.1 to about 300 parts by mass, and more preferably about 1 to about 150 parts by mass with respect to 100 parts by mass of the solid content of the resin component contained in the pigment dispersion resin.

If desired, the thermosetting coating material may further contain an additive for a coating material such as an organic solvent, a thickener, a UV absorber, a light stabilizer, a defoaming agent, a plasticizer, a surface conditioner, an anti-settling agent, a dispersant, a color separation inhibitor, a rheology control agent, a leveling agent, a base material wetting agent, or a slipping agent.

Examples of the thickener include inorganic thickeners such as a silicate, a metal silicate, montmorillonite, and colloidal alumina; polyacrylic acid-based thickeners such as a copolymer of (meth)acrylic acid and a (meth)acrylate ester, and sodium polyacrylate; associative thickeners having a hydrophilic part and a hydrophobic part in one molecule and exhibiting a thickening action by adsorption of the hydrophobic part to the surface of the pigment or emulsion particle in the coating material, or association of the hydrophobic parts, or the like, in an aqueous medium; cellulose derivative-based thickeners such as carboxymethyl cellulose, methyl cellulose, and hydroxyethyl cellulose; protein-based thickeners such as casein, sodium caseinate, and ammonium caseinate; alginic acid-based thickeners such as sodium alginate; polyvinyl-based thickeners such as polyvinyl alcohol, polyvinylpyrrolidone, and a polyvinyl benzyl ether copolymer; polyether-based thickeners such as Pluronic polyether, a polyether dialkyl ester, polyether dialkyl ether, and a polyether epoxy-modified product; maleic anhydride copolymer-based thickeners such as a partial ester of a vinyl methyl ether-maleic anhydride copolymer; polyamide-based thickeners such as a polyamide amine salt, and the like, and any combination thereof.

The polyacrylic acid-based thickener is commercially available, and examples thereof include "ACRYSOLASE-60", "ACRYSOLTT-615", and "ACRYSOLRM-5" (hereinabove, trade names) manufactured by Rohm and Haas Company, "SN Thickener 613", "SN Thickener 618", "SN Thickener 630", "SN Thickener 634", and "SN Thickener 636" (hereinabove, trade names) manufactured by SAN NOPCO LIMITED, and the like.

Further, the associative thickener is commercially available, and examples thereof include "UH-420", "UH-450", "UH-462", "UH-472", "UH-540", "UH-752", "UH-756VF", and "UH-814N" (hereinabove, trade names) manufactured by ADEKA Corporation, "ACRYSOLRM-8W", "ACRYSOLRM-825", "ACRYSOLRM-2020NPR", "ACRYSOLRM-12W", and "ACRYSOLSCT-275" (hereinabove, trade names) manufactured by Rohm and Haas Company, "SN Thickener 612", "SN Thickener 621N", "SN Thickener 625N", "SN Thickener 627N", and "SN Thickener 660T" (hereinabove, trade names) manufactured by SAN NOPCO LIMITED, and the like.

As the pigment dispersion resin, it is preferable to use an acrylic pigment dispersion resin. More specifically, for example, an acrylic resin obtained by polymerizing a polymerizable unsaturated monomer with a polymerization initiator in the presence of a hydrophilic organic solvent can be exemplified.

Examples of the polymerizable unsaturated monomer include the compounds exemplified in the above-mentioned synthesis of the resin, which can be used in appropriate combinations.

The pigment dispersion resin is preferably a resin that can be dissolved or dispersed in water, and specifically has a hydroxyl value of preferably 10 to 100 mgKOH/g, and more preferably 20 to 70 mgKOH/g, and has an acid value of preferably 10 to 80 mgKOH/g, and more preferably 20 to 60 mgKOH/g.

Examples of the hydrophilic organic solvent used for the polymerization include alcohol-based organic solvents such as methanol, ethanol, isopropanol, n-butanol, and isobutanol; ether-based organic solvents such as dioxane and tetrahydrofuran; ethylene glycol ether-based organic solvents such as ethylene glycol monomethyl ether, ethylene glycol monoethyl ether, ethylene glycol mono-n-propyl ether, ethylene glycol monoisopropyl ether, ethylene glycol mono-n-butyl ether, ethylene glycol monoisobutyl ether, and ethylene glycol mono-tert-butyl ether; diethylene glycol ether-based organic solvents such as diethylene glycol monomethyl ether, diethylene glycol monoethyl ether, diethylene glycol mono-n-propyl ether, diethylene glycol monoisopropyl ether, diethylene glycol mono-n-butyl ether, diethylene glycol monoisobutyl ether, and diethylene glycol mono-tert-butyl ether; propylene glycol ether-based organic solvents such as propylene glycol monomethyl ether, propylene glycol monoethyl ether, propylene glycol mono-n-propyl ether, and propylene glycol monoisopropyl ether; dipropylene glycol ether-based organic solvents such as dipropylene glycol monomethyl ether, dipropylene glycol monoethyl ether, dipropylene glycol mono-n-propyl ether, and dipropylene glycol monoisopropyl ether; ester-based organic solvents such as ethyl acetate, butyl acetate, isobutyl acetate, and 3-methoxybutyl acetate; and the like, and combinations thereof.

The aqueous thermosetting resin composition of the present invention preferably contains the pigment dispersion resin in an amount of, preferably 5 to 70 mass%, and more preferably 7 to 61 mass% as a solid content based on the total solid content mass of the resin and the pigment dispersion resin. The above-mentioned range is preferable from the viewpoint of the storage stability of the aqueous thermosetting resin composition and the finishing property, water resistance, intermediate grinding property, etc. of the colored coating film formed using the color coating material composition of the present invention.

A material to be coated to which the thermosetting resin composition of the present invention can be applied is not particularly limited, and for example, an outer panel portion of an automobile body such as a passenger car, a truck, a motorcycle, or a bus; an automobile part; household electric appliances such as a mobile phone and an audio device, a building material, furniture, an adhesive, a coating agent for films or glass, and the like, and various examples can be exemplified. Further, coating on a precoated metal that forms a coating film by high-temperature short-time curing or a metal can can also be exemplified. Further, the use for an electrodeposition coating material, an adhesive, a particle board, and the like can also be exemplified.

The thermosetting resin composition of the present invention can also be used for forming a multilayer coating film. Among the multilayer coating films, it can also be suitably used in the formation of a multilayer coating film by a wet-on-wet process.

The wet-on-wet method means a method in which after forming a first coating film layer, only drying is performed without causing curing, and a second coating film layer is applied thereto, and a plurality of coating film layers are simultaneously thermally cured. It is also possible to form three or more coating film layers by such a method.

In the formation of a multilayer coating film by such a wet-on-wet process, transfer of coating film components occurs between layers. Therefore, the components contained in the layer may be eluted into other layers and sometimes adversely affect the curability. The thermosetting resin composition of the present invention has good reactivity and is not easily adversely affected by other components, and therefore, it can be suitably used for forming a multilayer coating film by a wet-on-wet process.

As a widely used wet-on-wet coating method, a method in which an aqueous base coating material is used as a first layer and a solvent-based clear coating material is used as a second layer is exemplified. The thermosetting resin composition of the present invention may be used in both the first layer and the second layer, or may be used in only one of these layers.

As described above, when the thermosetting resin composition of the present invention is an aqueous coating material, suitable performance can be obtained. Further, as described above, even when a component of another coating film layer is mixed, good curing performance can be obtained.

Therefore, even when the thermosetting resin composition of the present invention is used in the solvent-based clear coating material of the second layer, the problem that the curing performance is lowered by a component derived from the aqueous base coating material of the first layer is less likely to occur, which is preferable.

The aqueous thermosetting resin composition can also be used as an electrodeposition coating material composition. Examples of the electrodeposition coating material include a cationic electrodeposition coating material and an anionic electrodeposition coating material, and any of these can be used.

The material to be coated may be a material in which a metal surface of the above-mentioned metal material and a vehicle body or the like molded from the metal material is subjected to a surface treatment such as a phosphate treatment, a chromate treatment, or a composite oxide treatment, and may also be a material to be coated having a coating film.

As the material to be coated having a coating film, a material in which a base material is subjected to a surface treatment as needed so as to form an undercoat coating film thereon, or the like can be exemplified. In particular, a vehicle body in which an undercoat coating film is formed with an electrodeposition coating material is preferable, and a vehicle body in which an undercoat coating film is formed with a cationic electrodeposition coating material is more preferable.

The material to be coated may be a material in which a plastic surface of the above-mentioned plastic material, an automobile part or the like molded from the plastic material is subjected to a surface treatment, primer coating, or the like as needed. Further, it may be a material in which the above-mentioned plastic material and the above-mentioned metal material are combined.

The coating method for the aqueous thermosetting resin composition is not particularly limited, and examples thereof include air spray coating, airless spray coating, rotary atomization coating, curtain coat coating, and the like, and air spray coating, rotary atomization coating, and the like are preferable. At the time of coating, static electricity may be applied as needed. By the above-mentioned coating method, a wet coating film can be formed from the aqueous coating material composition.

The wet coating film can be cured by heating. The curing can be carried out by a known heating unit, for example, a drying furnace such as a hot air furnace, an electric furnace, or an infrared induction heating furnace. The wet coating film can be cured by heating at a temperature in a range of preferably about 80 to about 180°C, more preferably about 100 to about 170°C, and still more preferably about 120 to about 160°C, for preferably about 10 to about 60 minutes, and more preferably, about 15 to about 40 minutes. Further, it is preferable in that it can also cope with low temperature curing at 80 to 140°C.

The thermosetting resin composition of the present invention can also be used in a multilayer coating film forming method using a wet-on-wet process. In this case, a method in which after a coating material composed of the thermosetting resin composition of the present invention is applied, another coating material composition is applied thereon in a state where curing is not performed, and these two coating film layers are baked simultaneously, thereby forming a multilayer coating film, or the like can be exemplified. Further, in such a coating method, as a multilayer coating film composed of two layers or three or more layers, at least one layer thereof may be formed with the aqueous thermosetting resin composition of the present invention.

When the thermosetting resin composition of the present invention is used for forming such a multilayer coating film, the coating material used in combination may be water-based or solvent-based. Further, the curing system may be a curing system by a transesterification reaction as described above, or may be another curing system such as melamine curing or isocyanate curing.

When the aqueous thermosetting resin composition of the present invention is used in the field of coating materials, it is required to have sufficient curing performance including performance such as smoothness, water resistance, and acid resistance.

On the other hand, when it is used in the field of adhesives, gluing agents, or the like, high curing performance required for coating materials is not required. The aqueous thermosetting resin composition of the present invention can be brought to a level that can be used as a coating material, but even if the composition does not reach such a level, it can sometimes be used in the field of adhesives, gluing agents, or the like.

The present invention is a cured film characterized by being formed by three-dimensionally crosslinking the above-mentioned thermosetting resin composition.

Such a cured film has sufficient performance so that it can be used as a coating material or an adhesive.

The cured film also includes a cured film formed by the method for forming a multilayer coating film described above.

### Examples

Hereinafter, the present invention will be described based on Examples. In the Examples, when "part" and "%" are used, they represent "part by weight" and "wt%" unless otherwise specified.

### Synthesis Example 1

100 Parts of methyl bromoacetate, 84 parts of sodium chloroacetate, and 123 parts of dimethylformamide were mixed, stirred at room temperature for 5 hours, and then stirred at 50°C for 6 hours. After completion of the reaction, 150 parts of toluene and 200 parts of water were added thereto, and water washing was performed. The organic layer was washed three times with 200 parts of water, and then the obtained organic layer was concentrated under reduced pressure, thereby obtaining a chloroacetate ester A.

### Synthesis Example 2

40 Parts of the chloroacetate ester A, 36 parts of potassium methacrylate, 2.4 parts of triethylamine, and 76 parts of toluene were mixed and stirred at 95°C for 6 hours. After completion of the reaction, the mixture was washed four times with 150 parts of water. The obtained organic layer was concentrated under reduced pressure, thereby obtaining a monomer A-1.

### Synthesis Example 3

70 Parts of sodium chloroacetate, 80 parts of methyl chloroacetate, 15 parts of triethylamine, and 166 parts of toluene were mixed and stirred at 80°C for 2 hours. Thereafter, 100 parts of potassium methacrylate was added thereto, and the mixture was further stirred at 80°C for 2 hours. After completion of the reaction, the mixture was washed four times with 300 parts of water. The obtained organic layer was concentrated under reduced pressure, thereby obtaining a monomer A-2.

### Synthesis Example 4

15 Parts of methyl lactate, 20 parts of toluene, and 16 parts of pyridine were mixed and cooled to 0 to 5°C with stirring. Thereafter, 15 parts of chloroacetyl chloride was added dropwise thereto over 1 hour under an ice bath. After completion of the dropwise addition, the temperature was raised to 25°C, and the mixture was stirred for 3 hours. After completion of the reaction, 30 parts of water and 9 parts of p-toluenesulfonic acid were added thereto, and neutralization and water washing were performed. The organic layer was washed twice with 60 parts of a 10% sodium hydrogen carbonate aqueous solution, and then the obtained organic layer was concentrated under reduced pressure, thereby obtaining a chloroacetate ester B.

### Synthesis Example 5

40 Parts of the chloroacetate ester B, 36 parts of potassium methacrylate, 2.4 parts of triethylamine, and 76 parts of toluene were mixed and stirred at 95°C for 6 hours. After completion of the reaction, the mixture was washed four times with 150 parts of water. The obtained organic layer was concentrated under reduced pressure, thereby obtaining a monomer B.

### Synthesis Example 6

90 Parts of methyl chloroacetate, 130 parts of potassium carbonate, and 250 parts of dimethylformamide were mixed, and 78 parts of methacrylic acid was added dropwise to the mixed solution at 30 to 40°C. After completion of the dropwise addition, 8 parts of triethylamine was added thereto, and the mixture was stirred at 50°C for 4 hours. After completion of the reaction, the mixture was washed with 500 parts of water. 300 Parts of toluene was added to the organic layer, and the mixture was washed four times with 300 parts of water. The obtained organic layer was distilled under reduced pressure, thereby obtaining a monomer C.

The content of each component in the monomer is shown in Table 1. However, the content was calculated from the area ratio measured by GPC.

**[Table 1]**

| Monomer | n = 0 | n = 1 | n = 2 | n = 3 | n = 4 | n = 5 or more |
|---|---|---|---|---|---|---|
| A-1 | 0 | 46 | 30 | 13 | 6 | 3 |
| A-2 | 26 | 37 | 20 | 8 | 3 | 2 |
| B | 0 | 90 | 2 | 7 | 0 | 0 |
| c | 97 | 3 | 0 | 0 | 0 | 0 |

### Synthesis Example 7

4 Parts of methacrylic acid, 10 parts of ethyl 6-bromohexanoate, 9 parts of potassium carbonate, and 14 parts of dimethylformamide were mixed and stirred at 75°C for 3 hours. After completion of the reaction, 30 parts of toluene was added thereto and washed four times with 50 parts of water. The obtained organic layer was concentrated under reduced pressure, thereby obtaining a monomer D.

### Synthesis Example 8

54 Parts of ethylene glycol monoacetoacetate monomethacrylate, 43 parts of methyl acrylate, 33 parts of potassium carbonate, 2 parts of 18-crown-6 ether, and 97 parts of tetrahydrofuran were mixed and stirred at 50°C for 3 hours. After completion of the reaction, cyclohexane and water were added thereto, and water washing was performed. The organic layer was neutralized with a saturated ammonium chloride aqueous solution, and then, washed twice with water, and the obtained organic layer was concentrated under reduced pressure, thereby obtaining a monomer E.

### Synthesis Examples 9 to 15

100 Parts of a monomer mixed liquid in a proportion shown in Table 2, and an initiator solution in which 5 parts of AIBN was dissolved in 50 parts of an aromatic hydrocarbon (T-SOL 100) were prepared.

50 Parts of the aromatic hydrocarbon (T-SOL 100) was placed in a stirrable flask, and the monomer mixed liquid and the initiator solution were added dropwise thereto while filling with nitrogen. The polymerization temperature at this time was set to 100°C. The dropwise addition was performed over 2 hours, and further aging was performed at 100°C for 4 hours, thereby obtaining polymer solutions A to E.

**[Table 2]**

| | Polymer solution A-1-1 | Polymer solution A-1-2 | Polymer solution A-2 | Polymer solution B | Polymer solution C | Polymer solution D | Polymer solution E |
|---|---|---|---|---|---|---|---|
| Monomer A-1 | 30 | 30 | | | | | |
| Monomer A-2 | | | 30 | | | | |
| Monomer B | | | | 30 | | | |
| Monomer C | | | | | 30 | | |
| Monomer D | | | | | | 30 | |
| Monomer E | | | | | | | 30 |
| 2-ethylhexyl methacrylate | 20 | 20 | 20 | 20 | 20 | 20 | 20 |
| 2-hydroxyethyl acrylate | 25 | | 25 | 25 | 25 | 25 | 25 |
| 4-hydroxybutyl acrylate | | 25 | | | | | |
| styrene | 25 | 25 | 25 | 25 | 25 | 25 | 25 |
| Weight average molecular weight | 11000 | 10700 | 10900 | 9200 | 8100 | 8700 | 9500 |
| Dispersity | 2.18 | 1.93 | 1.98 | 1.97 | 1.84 | 1.94 | 1.99 |

In the Examples, the monomer content, weight average molecular weight, and dispersity are values of the area ratio and the polystyrene-equivalent molecular weight measured by gel permeation chromatography (GPC). As a column, GPC KF-802 (manufactured by Showa Denko K.K., measurement of monomer content) or KF-804L (manufactured by Showa Denko K.K., measurement of weight average molecular weight and dispersity) was used, and as a solvent, tetrahydrofuran was used.

### Examples 1 to 7 and Comparative Examples 1 to 2

Respective components shown in Table 3 were mixed, and a coating film of 400 µm was prepared by WET using an applicator and cured at each baking temperature for 30 minutes. Then, a gel fraction, a xylene rubbing test, and a rigid body pendulum test with an adjusted liquid were performed.

**[Table 3]**

| | Exampl e 1 | Exampl e 2 | Exampl e 3 | Exampl e 4 | Exampl e 5 | Exampl e 6 | Exampl e 7 | Comparativ e Example 1 | Comparativ e Example 2 |
|---|---|---|---|---|---|---|---|---|---|
| Polymer solution A-1-1 | 100 | 100 | | | | | | | |
| Polymer solution A-1-2 | | | 100 | | | | | | |
| Polymer solution A-2 | | | | 100 | 100 | | | | |
| Polymer solution B | | | | | | 100 | | | |
| Polymer solution C | | | | | | | 100 | | |
| Polymer solution D | | | | | | | | 100 | |
| Polymer solution E | | | | | | | | | 100 |
| Dioctyltin diacetate | 1.5 | | | 1.5 | | 1.5 | 1.5 | 1.5 | 1.5 |
| Zinc acetylacetonat e | | 1.5 | 1.5 | | 1.5 | | | | |
| Baking temperature | 120 | 120 | 100 | 120 | 120 | 120 | 120 | 120 | 120 |
| Baking time | 30 | 30 | 30 | 30 | 30 | 30 | 30 | 30 | 30 |
| Gel fraction | A | A | A | A | A | A | A | C | C |
| Xylene rubbing | A | A | A | A | A | A | A | D | D |
| Pendulum test | Fig. 1 | Fig. 2 | Fig. 3 | Fig. 4 | Fig. 5 | Fig. 6 | Fig. 7 | Fig. 8 | Fig. 9 |

From the results of each of Examples and Comparative Examples in Table 3 described above, it is apparent that the thermosetting resin composition of the present invention can obtain sufficient curing performance even at a low temperature of 120°C. It is apparent that the transesterification reactivity is remarkably excellent as compared with that of Comparative Examples 1 and 2 which does not have the structure (a) represented by the general formula (1) of the present invention.

### Synthesis Examples 16 to 18

100 Parts of a monomer mixed liquid in a proportion shown in Table 4, and an initiator solution in which 5 parts of AIBN was dissolved in 50 parts of butyl glycol were prepared.

50 Parts of butyl glycol was placed in a stirrable flask, and the monomer mixed liquid and the initiator solution were added dropwise thereto while filling with nitrogen. The polymerization temperature at this time was set to 100°C. The dropwise addition was performed over 2 hours, and further aging was performed at 100°C for 4 hours, thereby obtaining polymer solutions F to H.

**[Table 4]**

| | Polymer solution F | Polymer solution G | Polymer solution H |
|---|---|---|---|
| Monomer A-1 | 30 | | |
| Monomer C | | 30 | |
| Monomer E | | | 30 |
| 2-ethylhexyl methacrylate | 20 | 20 | 20 |
| 4-hydroxybutyl acrylate | 25 | 25 | 25 |
| styrene | 25 | 25 | 25 |
| Methacrylic acid | 5 | 5 | 5 |
| Weight average molecular weight | 37800 | 28800 | 25000 |
| Dispersity | 2.96 | 2.70 | 2.43 |

### Examples 8 to 11 and Comparative Example 3

Respective components shown in Table 5 were mixed, and a coating film of 400 µm was prepared by WET using an applicator and cured at each baking temperature for 30 minutes. Then, a gel fraction, a xylene rubbing test, and a rigid body pendulum test with an adjusted liquid were performed.

**[Table 5]**

| | Example 8 | Example 9 | Example 10 | Example 11 | Comparative Example 3 |
|---|---|---|---|---|---|
| Polymer solution F | 100 | 100 | 100 | | |
| Polymer solution G | | | | 100 | |
| Polymer solution H | | | | | 100 |
| 2-amino-2-methyl-1-propanol | 4 | 4 | 4 | 4 | 4 |
| Ion exchanged water | 10 | 10 | 10 | 10 | 10 |
| Dioctyltin diacetate | 1.5 | | | 1.5 | 1.5 |
| Monobutyltin oxide | | 1.5 | | | |
| Zinc acetate | | | 1.5 | | |
| Baking temperature | 150 | 150 | 150 | 150 | 150 |
| Baking time | 30 | 30 | 30 | 30 | 30 |
| Gel fraction | A | A | A | A | D |
| Xylene rubbing | A | A | A | A | D |
| Pendulum test | Fig. 10 | Fig. 11 | Fig. 12 | Fig. 13 | Fig. 14 |

As apparent from the above Table 5, it is clear that even when the thermosetting resin composition of the present invention is an aqueous coating material, sufficient curing performance can be obtained.

### Preparation of Aqueous Base Coating Material

To a mixture of 17 parts of a black pigment (carbon black: Raven 5000 UIII), 100 parts of water, 10 parts of a dispersant (a product of Kyoeisha Chemical Co., Ltd.: FLOWLEN GW-1500), and 0.6 parts of a defoaming agent (a product of Kyoeisha Chemicals Co., Ltd.: AQUALEN HS-01), 100 parts of glass beads (particle diameter: 1.5 to 2.0 mm) were added and dispersed for 2 hours with a round shaker, thereby preparing a pigment dispersion paste A.

19 Parts of the prepared pigment dispersion paste A, 70 parts of WATERSOL ACD-2001 (a product of DIC Corporation), and 30 parts of NIKALAC MS-11 (a product of Sanwa Chemical Co., Ltd.) were mixed, and the mixture was diluted with water to 20 to 25 seconds with a Ford cup, thereby preparing an aqueous base coating material A.

### Examples 12 to 15 and Comparative Examples 4 to 5

The aqueous base coating material A was spray-coated on a dull steel plate having a thickness of 0.8 mm so as to have a film thickness of 20 µm after drying, and preheated at 80°C for 5 minutes. Each clear coating material prepared according to the formulation in Table 6 was applied by a wet-on-wet process on this coating film so that the film thickness after drying was 40 µm, and after a setting time of 10 minutes, baking was performed at 140°C for 30 minutes, thereby forming a clear coat coating film. For the obtained coating film, evaluation of coating film conditions, a xylene rubbing resistance test, and an acid resistance test were performed.

**[Table 6]**

| | Example 12 | Example 13 | Example 14 | Example 15 | Comparative Example 4 | Comparative Example 5 |
|---|---|---|---|---|---|---|
| Polymer solution A-1 | 100 | | | | | |
| Polymer solution A-2 | | 100 | | | | |
| Polymer solution B | | | 100 | | | |
| Polymer solution C | | | | 100 | | |
| Polymer solution D | | | | | 100 | |
| Polymer solution E | | | | | | 100 |
| Dioctyltin diacetate | 1.5 | 1.5 | 1.5 | 1.5 | 1.5 | 1.5 |
| APX4179C | 0.5 | 0.5 | 0.5 | 0.5 | 0.5 | 0.5 |
| Appearance of coating film | A | A | A | A | A | A |
| Xylene rubbing | A | A | A | A | D | D |
| Acid resistance | A | A | A | A | D | D |

From the results in Table 6, it is apparent that also when wet-on-wet coating is performed using the thermoplastic resin composition of the present invention as a solvent-based coating material, good curing performance is obtained.

### Synthesis Example 16

60 Parts of methyl chloroacetate, 40 parts of trisodium citrate, and 1.5 parts of triethylamine were mixed and stirred at 100°C for 5 hours. After completion of the reaction, 250 parts of toluene and 150 parts of water were added thereto, and water washing was performed. The organic layer was washed three times with 150 parts of water and then concentrated under reduced pressure, thereby obtaining an ester compound A.

### Synthesis Example 17

36 Parts of methyl chloroacetate, 32 parts of sodium chloroacetate, and 1.5 parts of triethylamine were mixed and stirred at 100°C for 3 hours. Thereafter, 24 parts of trisodium citrate was added thereto, and the mixture was further stirred at 100°C for 5 hours. After completion of the reaction, 250 parts of toluene and 150 parts of water were added thereto, and water washing was performed. The organic layer was washed three times with 150 parts of water and then concentrated under reduced pressure, thereby obtaining an ester compound B.

### Synthesis Example 18

A mixed liquid of 50 parts of methyl methacrylate, 35 parts of 2-hydroxyethyl acrylate, and 15 parts of styrene, and an initiator solution in which 1 part of AIBN was dissolved in 50 parts of butyl glycol were prepared.

50 Parts of butyl glycol was placed in a stirrable flask, and the monomer mixed liquid and the initiator solution were added dropwise thereto while filling with nitrogen. The polymerization temperature at this time was set to 100°C. The dropwise addition was performed over 2 hours, and further aging was performed at 100°C for 4 hours, thereby obtaining a polymer solution I.

### Examples 12 to 13 and Comparative Example 4

Respective components shown in Table 7 were mixed, and a coating film of 400 µm was prepared by WET using an applicator and cured at each baking temperature for 30 minutes. Thereafter, a gel fraction and a xylene rubbing test were performed.

**[Table 7]**

| | Example 12 | Example 13 | Comparative Example 4 |
|---|---|---|---|
| Polymer solution I | 82 | 82 | 82 |
| Ester compound A | 18 | | |
| Ester compound B | | 18 | |
| Triethyl citrate | | | 18 |
| Dioctyltin diacetate | 1.8 | 1.8 | 1.8 |
| Baking temperature | 120 | 120 | 120 |
| Baking time | 30 | 30 | 30 |
| Xylene rubbing | A | A | A |
| Acid resistance | A | A | D |

From the results in Table 7, it is apparent that also when a compound including citric acid as a basic backbone and having the structure (a) represented by the general formula (1) introduced therein is used, good results are obtained.

Each evaluation was performed as follows.

The gel fraction was measured as the residual weight percentage of a film by dissolving a film obtained in Example under reflux in acetone using a Soxhlet for 30 minutes.
A case where the gel fraction was 0 to 40% was regarded as one that cannot withstand practical use and evaluated as D.
A case where the gel fraction was 40 to 60% was regarded as one in which a certain degree of curing is observed and evaluated as C.
A case where the gel fraction was 60 to 80% was regarded as one that can withstand practical use and evaluated as B.

A case where the gel fraction was 80 to 100% was regarded as one that has excellent performance and evaluated as A.

The appearance of the coating film was evaluated by visually observing the surface condition of the coating film after baking.
A: One having glossiness and a smooth surface condition
B: One in which orange peel-like unevenness is slightly observed
C: One in which orange peel-like unevenness and bubbles are observed and which has no glossiness
D: One having no glossiness, but having severe surface irregularities, orange peel-like unevenness, and bubbles

In the xylene rubbing test, the coated plate after baking was rubbed 10 times with xylene-impregnated medicinal gauze. After drying xylene, the surface condition was visually observed and evaluated.
A: One which was not changed at all
B: One which was slightly scratched
C: One which was slightly dissolved
D: One in which the surface was whitened and dissolved

The acid resistance was evaluated by dropping one drop of a 40% sulfuric acid aqueous solution on the coated plate after baking, leaving the plate at 60°C for 1 hour, and then, wiping off sulfuric acid, and lightly polishing the surface with an abrasive, and observing the state.
A: One which was not changed at all
B: One in which a slight outline of sulfuric acid was observed
C: One in which the coating film was deteriorated and whitened
D: One in which the coating film was decomposed and clearly eroded to the inside

In the rigid body pendulum test, the temperature was raised to 180°C at a heating rate of 3°C/min using a rigid body pendulum tester manufactured by A & D Co., Ltd. (model number: RPT-3000W), and the changes in the period and logarithmic decrement at that time were determined. In particular, it was used to confirm the cured state of the coating film.
Pendulum: FRB-100
Film thickness (WET): 100 µm

### Industrial Applicability

The thermosetting resin composition of the present invention can be used in applications of coating material compositions, adhesive compositions, and any other known thermosetting resin compositions.

## Claims

1. A thermosetting resin composition, **characterized by** comprising a resin component (A), which includes a structure (a) represented by the following general formula (1) and a hydroxy group (b), and a transesterification catalyst (B): 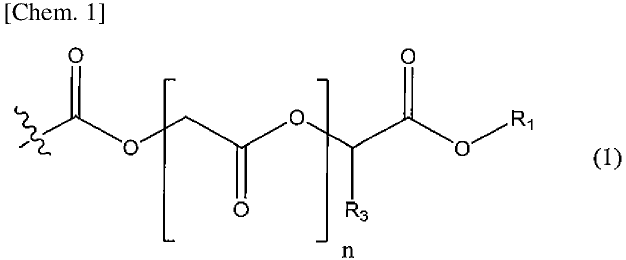 wherein n = 0 to 20,
R₁ is an alkyl group having 50 or less carbon atoms, and
R3 is hydrogen or an alkyl group having 10 or less carbon atoms.

2. The thermosetting resin composition according to claim 1, wherein the resin component (A) includes a compound having two or more functional groups in one molecule.

3. The thermosetting resin composition according to claim 1 or 2, wherein the structure (a) is a structure derived from a monomer represented by the following general formula (2): 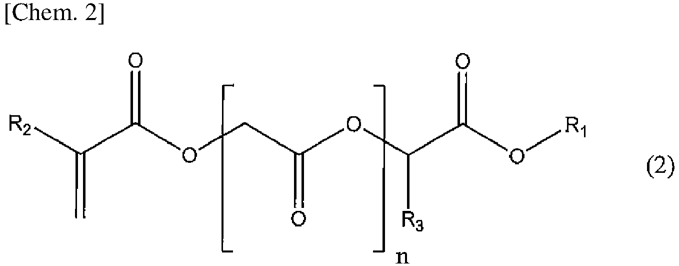 wherein n = 0 to 20,
R₁ is an alkyl group having 50 or less carbon atoms,
R2 is hydrogen or a methyl group, and
R3 is hydrogen or an alkyl group having 10 or less carbon atoms.

4. The thermosetting resin composition according to claim 1, 2, or 3, wherein the resin component (A) is a mixture of a plurality of structures having different values of n in the structure (a).

5. The thermosetting resin composition according to claim 1, 2, 3, or 4, which is an aqueous resin composition.

6. The thermosetting resin composition according to claim 5, wherein the resin component (A) further has a carboxylate group and is converted into an aqueous form by neutralizing the carboxylate group with a basic compound.

7. The thermosetting resin composition according to claim 1, 2, 3, or 4, which is an organic solvent-based resin composition.

8. A cured film, **characterized by** being obtained by curing the resin composition according to any one of claims 1 to 7 by heat.

9. A method for forming a multilayer coating film, **characterized by** comprising:
a step (1) of coating and drying an aqueous resin composition;
a step (2) of coating the thermosetting resin composition according to claim 7 by a wet-on-wet process; and
a step (3) of curing a multilayer coating film formed in the step (1) and the step (2).

10. A compound represented by the following general formula (3): 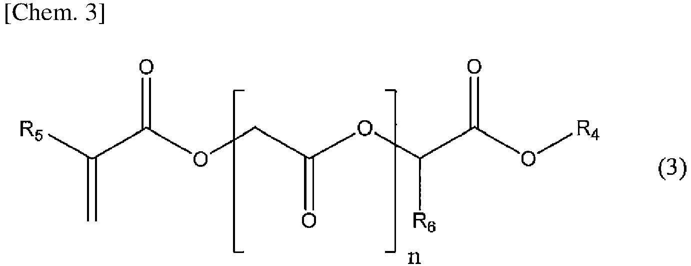 (wherein n is an integer of 1 to 20),
R4 is an alkyl group having 1 to 50 carbon atoms,
R₅ is hydrogen or a methyl group, and
R₆ is hydrogen or an alkyl group having 10 or less carbon atoms.

11. A polymer, comprising the compound of claim 10 as a part or the whole of the constituent unit.
